# EUROPEAN PATENT APPLICATION

(11) **EP 4 836 313 A1**
(43) Date of publication of application: **04.11.2026**
(21) Application number: 23963174.0
(22) Date of filing: 27.12.2023
(51) Int. Cl.: H04B 7/14

(54) **CONTROL DEVICE, WIRELESS COMMUNICATION SYSTEM, AND CONTROL METHOD**

(71) Applicant: NTT DOCOMO, INC., Tokyo 100-6150 (JP)
(72) Inventor: ONODA, Takanobu, Tokyo 100-6150 (JP); KURITA, Daisuke, Tokyo 100-6150 (JP); HARADA, Hiroki, Tokyo 100-6150 (JP)
(74) Representative: Hoffmann Eitle
(86) International application number: PCT/JP2023/047112
(87) International publication number: WO 2025/141826

(57) **Abstract**

This control device comprises: a control unit that, on the basis of a first direction toward a wireless communication device from an antenna device which relays a signal transmitted to the wireless communication device, determines control information for controlling relay in the antenna device; and a transmission unit that transmits the control information to the antenna device.

## Description

### Technical Field

The present disclosure relates to a control apparatus, a radio communication system, and a control method.

### Background Art

The 3rd Generation Partnership Project (3GPP) has standardized the 5th generation mobile communication system (also referred to as 5G, New Radio (NR), or Next Generation (NG)), and is further standardizing a next generation system called Beyond 5G, 5G Evolution, or 6G.

In NR, in addition to a user terminal (may be referred to as user equipment (UE) or simply a terminal) and a radio base station (may be simply referred to as a base station), the introduction of a radio apparatus, such as a reconfigurable intelligent surface (RIS), is being considered to achieve a higher data rate and to extend a range of a coverage (e.g., see Patent Literature (hereinafter, referred to as PTL) 1).

### Citation List

### Patent Literature

PTL 1
WO 2022/151016

### Summary of Invention

However, there is room for improvement in control related to a relay operation in a radio apparatus that has been considered for introduction.

An aspect of the present disclosure provides a control apparatus, a radio communication system, and a control method each capable of appropriately performing control related to a relay operation in a radio apparatus that has been considered for introduction.

A control apparatus according to one aspect of the present disclosure includes: a control section that determines control information based on a first direction toward a radio communication apparatus from an antenna apparatus that performs relay of a signal transmitted to the radio communication apparatus, the control information being for controlling relay in the antenna apparatus; and a transmission section that transmits the control information to the antenna apparatus.

### Brief Description of Drawings

FIG. 1 is a diagram illustrating an example of a radio communication system according to an embodiment of the present disclosure;
FIG. 2A is a diagram illustrating an example of a distant user in a high frequency band;
FIG. 2B is a diagram illustrating an example of a non-line of sight user in a high frequency band;
FIG. 3A is a diagram illustrating an example of communication using a configuration of an NCR;
FIG. 3B is a diagram illustrating an example of communication using an RIS;
FIG. 4 is a diagram illustrating an example of a system architecture including the RIS;
FIG. 5 is a diagram illustrating an example of a near field (NF) and a far field (FF) of the RIS;
FIG. 6A is a diagram illustrating an example of DFT-based beamforming (BF);
FIG. 6B is a diagram illustrating an example of beamfocusing with an optimal phase;
FIG. 6C is a diagram illustrating an example of beamfocusing with a steering vector of a near field (NF);
FIG. 7 is a diagram illustrating an example of SSB forwarding with the RIS applied;
FIG. 8 is a diagram illustrating an example of a precoder according to Example 1-1-1;
FIG. 9 is a diagram illustrating an example of a reference point;
FIG. 10 is a diagram illustrating an example of a precoder according to Example 1-1-2;
FIG. 11 is a diagram illustrating an example of a uniform grid in Cartesian coordinates;
FIG. 12 is a diagram illustrating an example of a method of beam sweeping between a TRP and a UE;
FIG. 13 is a diagram illustrating an example of control in one embodiment;
FIG. 14 is a diagram illustrating an example of a method of beam sweeping between an RIS-MT and a UE;
FIG. 15 is a diagram illustrating an exemplary incidence-reflection angle table illustrating a correspondence relationship between an incidence angle and a reflection angle in RIS;
FIG. 16 is a diagram illustrating an example of Option 1 of coordinate estimation of a UE;
FIG. 17 is a diagram illustrating an example of Option 2 of coordinate estimation of the UE;
FIG. 18 is a sequence diagram illustrating a flow of processing of Option 2 of beam control of the RIS in one embodiment;
FIG. 19 is a block diagram illustrating a configuration example of a base station according to an embodiment of the present disclosure;
FIG. 20 is a block diagram illustrating a configuration example of a terminal according to the embodiment of the present disclosure;
FIG. 21 is a block diagram illustrating a configuration example of a radio apparatus according to the embodiment of the present disclosure;
FIG. 22 is a diagram illustrating an example of a hardware configuration of the base station, the terminal, and the radio apparatus according to the embodiment of the present disclosure; and
FIG. 23 is a diagram illustrating an exemplary configuration of a vehicle.

### Description of Embodiments

### (One Embodiment)

Hereinafter, embodiments according to an aspect of the present disclosure will be described with reference to the accompanying drawings. Note that the embodiments described below are merely examples, and the embodiments to which the present disclosure is applied are not limited to the following embodiments.

Existing techniques are used as appropriate for operations of a radio communication system in an embodiment of the present disclosure. Note that the existing technology is, for example, existing LTE or existing NR, but is not limited to existing LTE or NR.

Terms used in existing LTE or NR, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal used in NR, it is not necessarily explicitly referred to as "NR-".

Further, in an embodiment of the present disclosure, the duplex method may be a time division duplex (TDD) method, a frequency division duplex (FDD) method, or another method (e.g., a flexible duplex method).

Furthermore, in an embodiment of the present disclosure, the term "configured" with respect to a radio parameter or the like may refer to a predetermined value being preconfigured, or it may refer to a radio parameter indicated from a base station or a terminal being configured.

### <Radio Communication System>

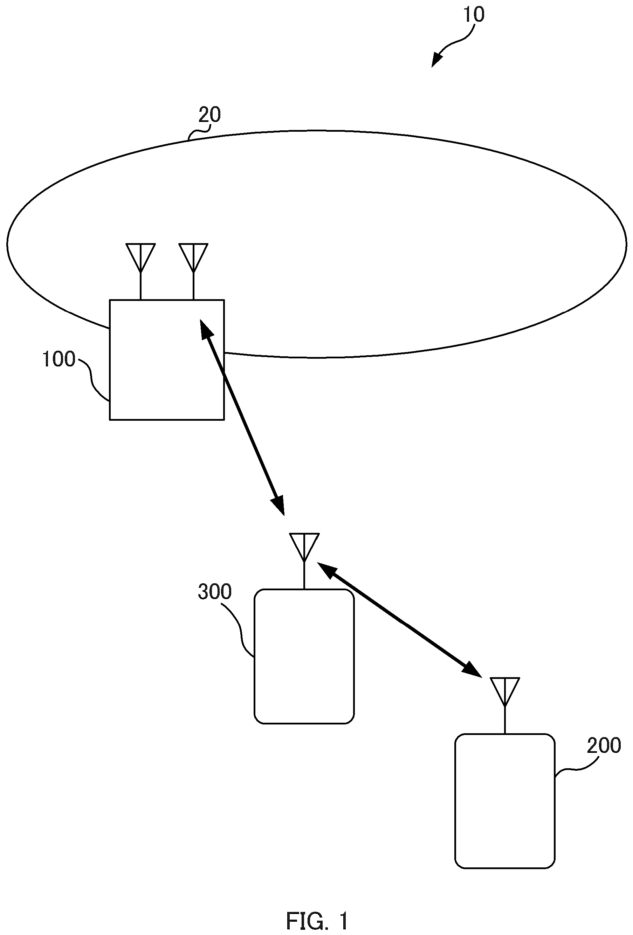

FIG. 1 is a diagram illustrating an example of radio communication system 10 according to an embodiment of the present disclosure. Radio communication system 10 is a radio communication system conforming to 5G NR or 6G NR, and includes next generation-radio access network 20 (hereinafter, referred to as NG-RAN 20) and terminal 200 (hereinafter, also referred to as user equipment (UE) 200).

Note that radio communication system 10 may be a radio communication system conforming to a system called Beyond 5G, 5G Evolution, or 6G.

NG-RAN 20 includes base station 100 (hereinafter also referred to as gNB 100). Note that the numbers of gNBs and UEs are not limited to the example illustrated in FIG. 1.

NG-RAN 20 actually includes a plurality of NG-RAN nodes, specifically gNBs (or ng-eNBs), and is connected to a core network conforming to 5G or 6G. Note that NG-RAN 20 and the core network may be simply referred to as a "network." Further, in the following, the gNB may be read as a network (NW).

gNB 100 is, for example, a base station conforming to 5G or 6G, and performs radio communication conforming to 5G or 6G with UE 200.

Further, in the example illustrated in FIG. 1, radio apparatus 300 that forwards signals is illustrated between gNB 100 and UE 200. In the following, radio apparatus 300 may be referred to as a reconfigurable intelligent surface (RIS).

Radio apparatus 300 performs a forwarding operation of forwarding a signal transmitted from gNB 100 toward UE 200, for example. Radio apparatus 300 may also perform a forwarding operation of forwarding a signal transmitted from UE 200 toward gNB 100. The "forwarding (forward)" may be replaced with "relaying". Further, the "operation" may be replaced with "processing," "control," or the like. Further, the RIS, which is an example of radio apparatus 300 being considered in NR, will be described later.

gNB 100 and UE 200 may controls radio signals transmitted from a plurality of antenna elements to handle Massive Multi Input Multi Output (MIMO) for generating a beam having a higher directivity, carrier aggregation (CA) using a plurality of component carriers (CCs) bundled together, dual connectivity (DC) for performing communication between UE and each of two NG-RAN nodes simultaneously, and the like.

Further, radio communication system 10 may support a plurality of frequency ranges (FRs). Radio communication system 10 may support FR1 and FR2. The frequency bands of respective FRs are as follows, for example.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and SCS of 60 kHz or 120 kHz (240 kHz may be included) may be used, and a bandwidth (BW) of 50 to 400 MHz may be used.

Note that, the SCS may be interpreted as numerology. The numerology is defined in 3GPP TS 38.300 and corresponds to one subcarrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band above 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

The time direction (t) may be referred to as a time domain, a symbol period, a symbol time, or the like. Further, the frequency direction may be referred to as a frequency domain, a resource block, a subcarrier, a bandwidth part (BWP), or the like.

gNB 100 transmits control information, configuration information, and the like of gNB 100 to UE 200 as a downlink (DL) signal.

Further, for example, gNB 100 receives, as an uplink (UL) signal, control information, a data signal, information on the processing capability of UE 200 (terminal capability (information); for example, UE capability), and the like from UE 200.

Radio apparatus 300 performs a forwarding operation of forwarding a DL signal to UE 200. Radio apparatus 300 performs a forwarding operation of forwarding a UL signal to gNB 100. Note that, in the following, the UL signal received by gNB 100 from UE 200 and/or the DL signal received by UE 200 from gNB 100 may be a signal forwarded by radio apparatus 300.

Note that radio apparatus 300 may be divided into an antenna panel that performs reflection, refraction, or the like of a signal as a transfer operation of a DL signal and/or a UL signal, and a control apparatus that controls the antenna panel. The antenna panel may be replaced with a notation such as an antenna section or an antenna apparatus. Further, the antenna panel may be denoted as a relay apparatus. In this case, the antenna panel may be connected to the control apparatus by wire or radio. Further, in this case, the control apparatus may have a communication function and may communicate with gNB 100 and/or UE 200. Further, in this case, the antenna panel may be controlled by the control apparatus or may be controlled by gNB 100. For example, gNB 100 may control the antenna panel by determining control information for controlling the antenna panel and transmitting the determined control information to the control apparatus.

UE 200 is a communication apparatus with a radio communication function, such as a smartphone, a mobile phone, a tablet, a wearable terminal, and a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of the propagation path quality based on a reception result of the reference signals.

The channel used for DL signal transmission includes, for example, a data channel and a control channel. For example, the data channel may include a Physical Downlink Shared Channel (PDSCH), and the control channel may include a Physical Downlink Control Channel (PDCCH). For example, gNB 100 transmits control information to UE 200 using PDCCH and transmits a DL data signal using PDSCH. Note that the PDSCH is an example of a downlink shared channel, and the PDCCH is an example of a downlink control channel. Note that the PDCCH may be read as downlink control information (DCI), control information, or the like transmitted in the PDCCH.

The reference signal included in a DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a DL data signal and is transmitted using the PDSCH.

The channel used for UL signal transmission includes, for example, a data channel and a control channel. For example, the data channel may include a Physical Uplink Shared Channel (PUSCH), and the control channel may include a Physical Uplink Control Channel (PUCCH). For example, UE 200 transmits control information using PUCCH and transmits a UL data signal using PUSCH. Note that the PUSCH is an example of an uplink shared channel, and the PUCCH is an example of an uplink control channel. The shared channel may also be referred to as a data channel. Note that the PUSCH or the PUCCH may be read as uplink control information (UCI), control information, or the like transmitted in the PUSCH or the PUCCH.

For example, the reference signal included in the UL signal may include at least one of a DMRS, PTRS, CSI-RS, SRS, RS, or PRS for position information. For example, the reference signal such as the DMRS and the PTRS is used for demodulating a UL data signal and is transmitted using the PUSCH.

### <Use of Sub-Terahertz Waves>

In a future radio communication system (e.g., 6G and thereafter), strict requirements are introduced with respect to capacity, coverage, power consumption, and other aspects. Studies have been conducted for realizing a data rate of 100 Gbps while maintaining sufficient coverage by using a band (spectrum) of sub-terahertz (e.g., 100 GHz to 300 GHz) that is a higher frequency band than the existing systems (e.g., NR Rel. 15/16/17).

In the studies, a transmission method of line of sight (LOS)-Multiple Input Multiple Output (MIMO) suitable for an access link is considered to be designed with 100 GHz, 100 Gbps, and (coverage of) 100 m as a target.

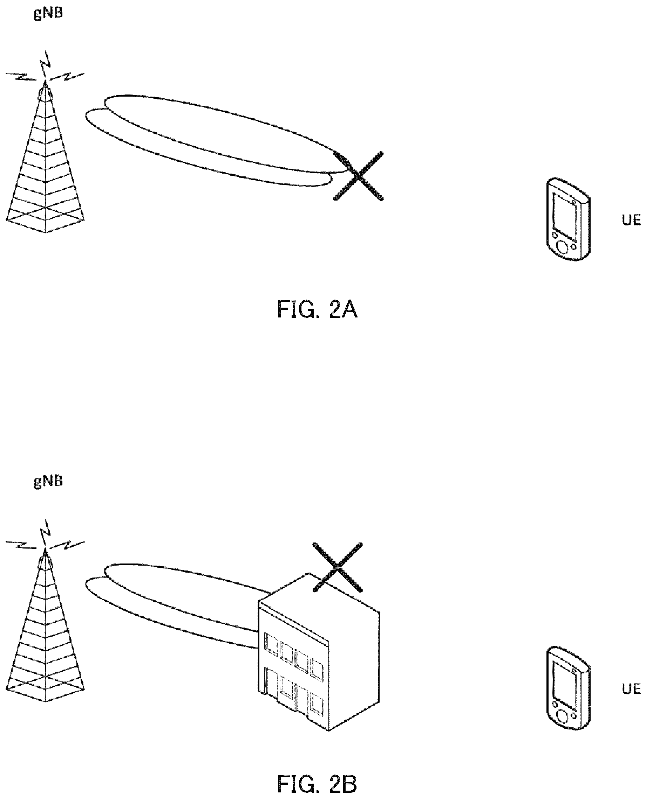

FIG. 2A is a diagram illustrating an example of a distant user in a high frequency band. In the example illustrated in FIG. 2A, orthonormal transmission cannot be performed because of a restriction on the size of a base station (BS) for mega MIMO for distant users.

FIG. 2B is a diagram illustrating an example of a non-line of sight (NLOS) user in a high frequency band. For NLOS users, efficient LOS-MIMO transmission cannot be performed due to blocking (e.g., a building).

The LOS-MIMO is not supported in MIMO of the existing NR (NR MIMO). In the existing NR, a very large bandwidth is needed to achieve the data rate of 100 Gbps, and it is difficult to secure such a very large bandwidth.

The NR MIMO is designed for an antenna far-field that only supports transmission of rank 1 in each polarization direction in an LOS channel. Multiplexing of rank 2 is possible by using double polarization, but a rank higher than rank 2 cannot be used. In order to achieve 100 Gbps, a bandwidth of several tens of GHz is required, but this is difficult to achieve in a practical system and places a high requirement on an RF component.

A LOS-MIMO scheme that has already been considered is not suitable for the access link because transmission and reception positions need to be fixed, or because a required array size is too large.

Therefore, studies have been conducted on introduction of a fixed large-interval antenna array, an orbital angular momentum (OAM)-MIMO, a mega MIMO utilizing a reconfigurable intelligent surface (RIS) (RIS-aided Mega MIMO), and the like.

The RIS has attracted attention as a new apparatus for network deployment by its flexible and cost-efficient approach, not limited to the example of the sub-terahertz waves described above. The RIS is being considered as a promising technology for achieving a very high data rate and a wide coverage extension in the topology of a 6G radio network. For example, in 3GPP Release 19 (Rel. 19), discussion on the RIS is being advanced.

### <Reconfigurable Intelligent Surface (RIS)>

The RIS relays communication between BS and UE by controlling a reflection angle of at least one of the reflection from a backhaul link toward an access link and the reflection from the access link toward the backhaul link. The RIS is an example of a radio apparatus for performing network deployment in a flexible and cost-efficient approach as compared with a new type of network (NW) node, such as an integrated access and backhaul (IAB), an RF repeater, and a network-controlled repeater (NCR).

The RIS may be configured by a plurality of reconfigurable scattering components. In the following, the scattering component is sometimes referred to as an element or an antenna element.

The RIS may control the direction of a reflected signal, or may control the direction of a transmitted (refracted) signal.

Note that, in the present disclosure, reflection, transmission, and refraction may be replaced with each other. Further, in the present disclosure, reflection, transmission, and refraction of a signal in the RIS may be regarded as the RIS receiving the signal transmitted from a specific direction and transmitting the signal in the same direction as the specific direction, or in a direction different from the specific direction. In this case, the signal transmitted by the RIS may be the same signal as the signal received by the RIS, or may be a signal that has been received by the RIS and has undergone specific processing. Further, the forwarding processing in the RIS in the present disclosure may be regarded as processing in which at least one of reflection, transmission, and refraction occurs in the RIS.

While the NCR amplifies a signal to be relayed, the RIS may not require an RF amplifier. This reduces the power consumption.

The RIS can obtain a beam gain by a narrow beam, but requires an increased number of RIS beams (beams reflected/refracted by the RIS).

The RIS may reflect/refract a signal other than a target frequency.

A material such as a liquid crystal, a metal, and a semiconductor may be used for the RIS. For example, the RIS using the liquid crystal is considered to be unsuitable for the current beam sweep operation due to the beam sweep speed slower than that of the RIS using the semiconductor.

The RIS may be installed on an object, such as a building, considering its thin and flexible shape.

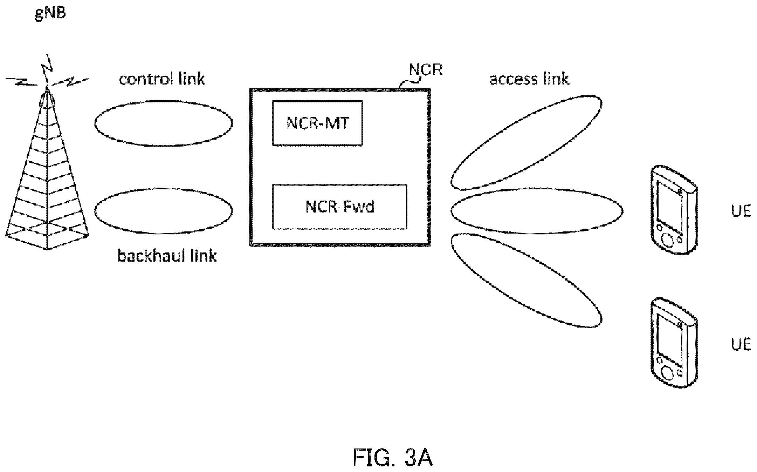

FIG. 3A is a diagram illustrating an example of communication using a configuration of an NCR. The NCR may include an NCR-mobile termination (MT) and an NCR-forwarding (Fwd). The NCR-MT communicates with a BS (gNB) via a control link.

The communication between the NCR-MT and the BS may include at least one of receiving configuration/instruction/control information from the BS and transmitting a request/report/response to the BS. The NCR-Fwd relays communication between the BS and UE by relaying/amplifying a signal from a backhaul link to an access link and relaying/amplifying a signal from the access link to the backhaul link.

Further, in the RIS, a configuration in which communication with a BS (gNB) is performed may be included, as in the NCR. In the RIS, the configuration in which communication with the BS (gNB) is performed may be referred to as RIS-MT. In other words, the RIS may also have RIS-MT and RIS-Fwd, as in the NCR. Further, the RIS-Fwd may be simply referred to as the RIS. In the following description, the operation of the RIS may be regarded as the operation of the RIS-Fwd or the operation of the RIS-MT. The RIS-MT is not limited to an example in which the communication with the BS is performed and may communicate with the UE.

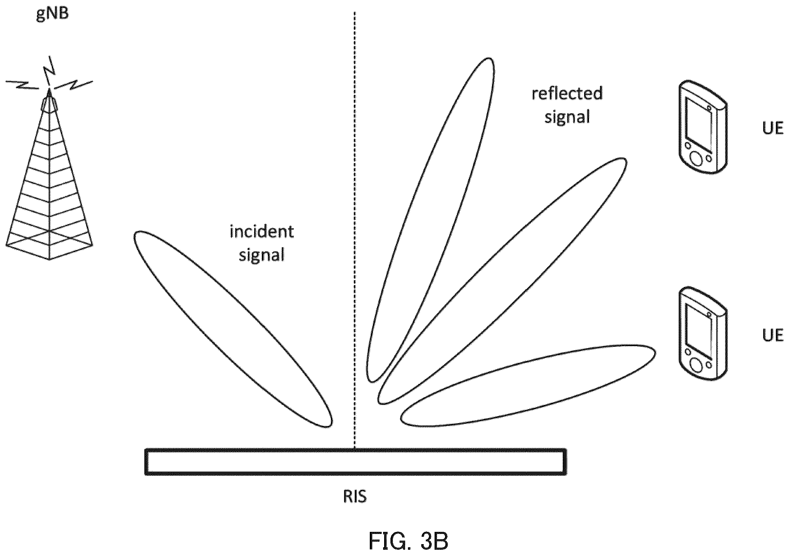

FIG. 3B is a diagram illustrating an example of communication using the RIS. The RIS relays communication between the BS and the UE by controlling a reflection angle of at least one of the reflection from a backhaul link toward an access link and the reflection from the access link toward the backhaul link.

### <System Architecture Including RIS>

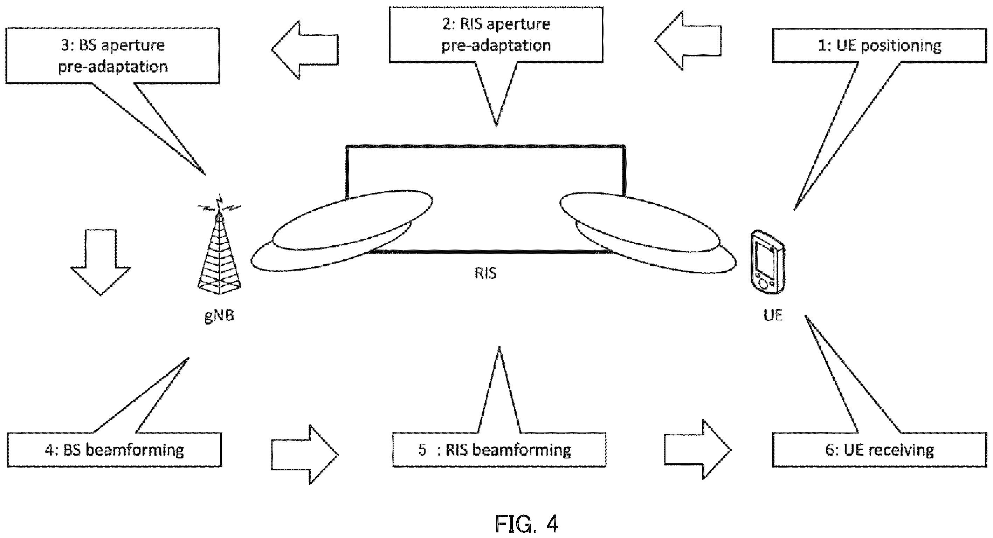

FIG. 4 is a diagram illustrating an example of a system architecture including the RIS. Hereinafter, the system architecture including the RIS will be described with reference to FIG. 4, but this is merely an example.

The system architecture including the RIS may include a plurality of (e.g., two) design phases.

For example, the system architecture including the RIS may include an aperture pre-adaptation phase.

In the aperture pre-adaptation phase, positioning of UE may be performed first. In the positioning of the UE, the UE may report information on the position/attitude of the UE to a network (NW). Further, in the positioning of the UE, the NW (base station) may estimate the information on the position/attitude of the UE based on a signal (e.g., a UL RS) transmitted from the UE.

Note that the positioning of the UE in the aperture pre-adaptation phase may be omitted.

Next, in the aperture pre-adaptation phase, aperture (e.g., an antenna element) pre-adaptation of the RIS may be performed.

In the present disclosure, the aperture adaptation may mean deciding/determining/selecting an antenna element/array to be used.

Next, in the aperture pre-adaptation phase, aperture (e.g., an antenna element) pre-adaptation of the BS may be performed.

Further, the system architecture including the RIS may include a beamforming phase.

The beamforming phase may follow the aperture pre-adaptation phase, for example.

In the beamforming phase, beamforming in the BS may be performed first.

Next, in the beamforming phase, beamforming in the RIS may be performed.

Then, in the beamforming phase, the UE may perform receiving. The UE may use a MIMO receiver based on CSI reception (CSIR).

Note that the receiving by the UE in the beamforming phase may be omitted.

### <Beamforming Methods for Far Field and Near Field>

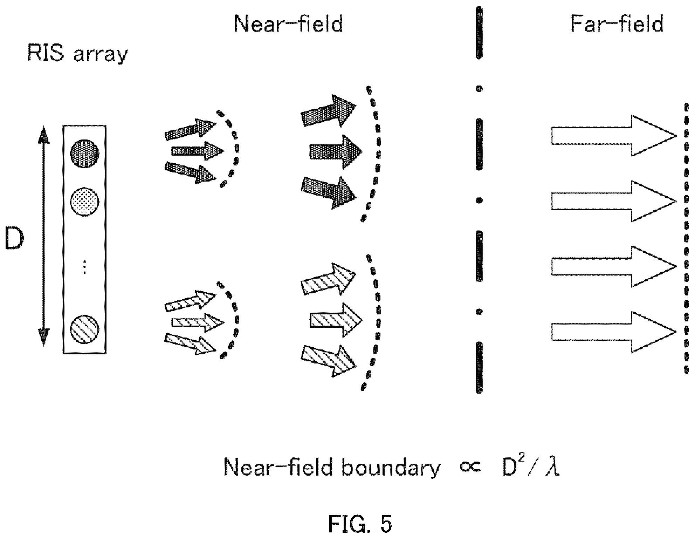

FIG. 5 is a diagram illustrating an example of a near field (NF) and a far field (FF) of the RIS. FIG. 5 illustrates an RIS array, a state of wave propagation in the near field of the RIS array, and a state of wave propagation in the far field of the RIS array. Note that the RIS array may be regarded as an example of a surface that transmits a signal or radiates a wave in the RIS. Further, the near field may be replaced with a short distance. Further, the far field may be replaced with a long distance.

A large aperture of the RIS indicates a specific characteristic of expanding a range of the near field. For example, as illustrated in FIG. 5, the boundary of the near field (e.g., the boundary between the near field and the far field) is proportional to the square of D that indicates the size related to the aperture of the RIS, and thus the large aperture of the RIS expands the range of the near field. Further, the boundary of the near field is inversely proportional to the wavelength λ, and thus the shorter the wavelength, that is, the higher the frequency, the larger the range of the near field. In the region of the near field, the phase delay for various elements of the RIS can be distinguished. As a result, the assumption of a plane wavefront is not useful, and it is necessary to consider a spherical wavefront. As illustrated in FIG. 5, in the region of the far field, a wavefront of a wave radiated from each element of the RIS is assumed to be a plane, but in the region of the near field, a wavefront of a wave generated from each element is a sphere.

A plurality of methods is being considered as a beamforming method for the existing far-field (FF) and near-field (NF).

For example, the beamforming methods may include a DFT-based beamforming (BF), a beamfocusing with an optimum phase, and a beamfocusing with a steering vector of a near field (NF).

The DFT-based BF may be mainly used for transmitting a signal to a distant terminal. The DFT-based BF may use a precoder (matrix) based on an angle-dependent linear phase.

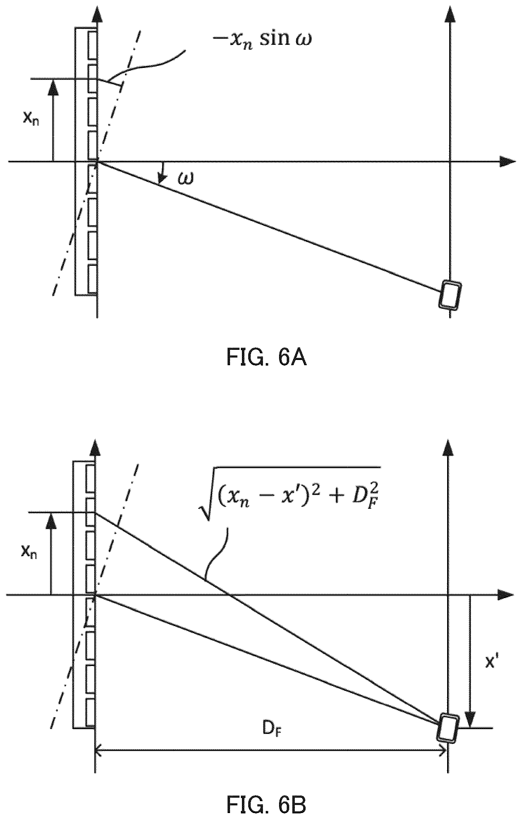

FIG. 6A is a diagram illustrating an example of the DFT-based beamforming (BF). Note that FIG. 6A illustrates an example of a uniform and linear array. In this example, xn is a distance from the array center to element n in the array and is an angle of a beam with respect to an axis perpendicular to the array.

The beamfocusing with the optimum phase may be mainly used for transmitting a signal to a close terminal. The beamfocusing with the optimum phase may use a precoder (matrix) based on a position (distance)-dependent non-linear phase.

FIG. 6B is a diagram illustrating an example of the beamfocusing with the optimum phase. Note that FIG. 6B illustrates an example of a uniform and linear array. In this example, DF is a focal distance, and x' is a distance from an axis perpendicular to the array to the focus.

The beamfocusing with the steering vector of the near field may be mainly used for transmitting a signal to a close terminal. The beamfocusing with the steering vector of the near field may use a precoder (matrix) based on an angle- & position (distance)-dependent quadratic phase.

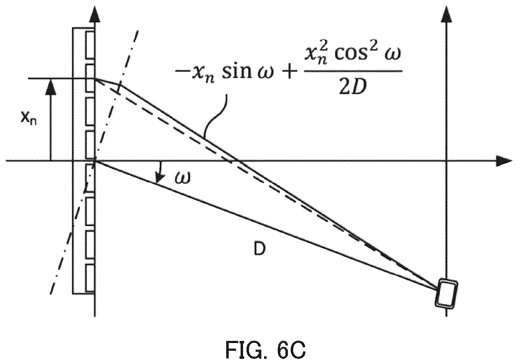

FIG. 6C is a diagram illustrating an example of the beamfocusing with the steering vector of the near field (NF). Note that FIG. 6C illustrates an example of a uniform and linear array. In this example, D is a distance from the center of the array to the focus, and ω is an angle from an axis perpendicular to the array to a straight line connecting the center of the array and the focus.

A conventional codebook for beamforming in the far field, such as a DFT codebook, cannot be directly applied to the near field because the conventional codebook is not suited to a channel in the near field. If the DFT codebook is applied to the beamforming in the near field, that may cause a significant loss of the SNR. In contrast, focused beamforming such as a ring-type codebook (RTC), which is a form in the near field of a coherent beamformer, does not have a restriction such as not being applicable to the near field.

For example, the RIS is adopted for data channel forwarding, and the above-described RTC generates a UE-specific focused beam to enable high-speed transmission.

Meanwhile, it is considered to use the RIS for forwarding a control channel (e.g., a synchronization signal block (SSB)).

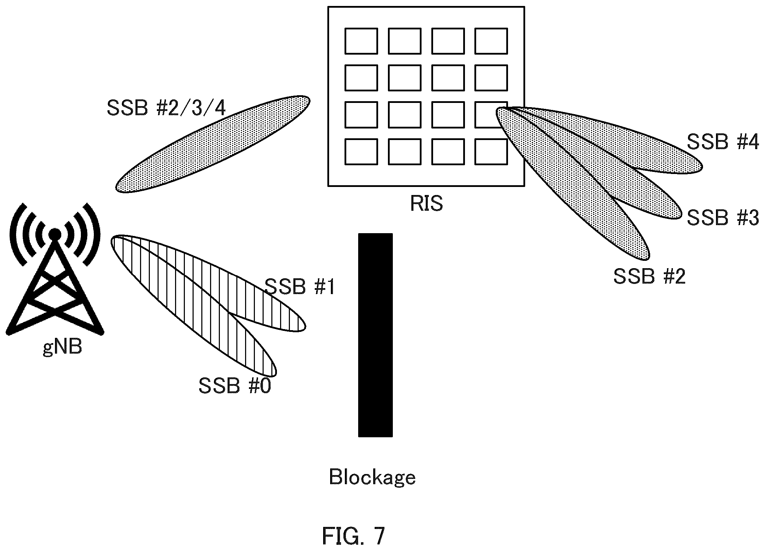

FIG. 7 is a diagram illustrating an example of SSB forwarding with the RIS applied. FIG. 7 illustrates the RIS forwarding the SSBs #2 to #4 among the SSBs #0 to #4 transmitted by the gNB.

In a case where the RIS forwards a control channel (e.g., the SSB), it is considered to expand a beam for the forwarding.

Here, an existing SSB forwarding method by the RIS and an existing beam expansion technology of the RIS will be described.

### <Existing Method>

Hereinafter, the existing SSB forwarding method by the RIS will be described. In the existing method, the RIS forwards an SSB transmitted by the gNB by using a large number of narrow beams. Therefore, in the existing method, a significant allocation of SSB resources is needed, or a significant change to the SSB scheme is needed.

Existing typical beam expansion technologies are classified into a technology based on a numerical optimization algorithm, a technology based on adjustment of an aperture, a technology based on logical subarray division, and an approach of wide-area illumination.

For example, in the technology based on a numerical optimization algorithm, the processing is complicated due to the complex algorithm. Therefore, it is difficult to achieve beamforming in a realistic time.

Further, for example, in the approach of wide-area illumination, it is difficult to accurately control the shaping of the pattern of a wide beam of the RIS according to a requirement of an actual coverage.

Further, for example, in the technology based on adjustment of an aperture, the beamforming gain of the array is reduced due to the adjustment of the aperture.

Further, for example, in the technology based on logical subarray division, the beamforming gain of the entire area varies significantly.

Here, an example of related art regarding the RIS including the adjustment of the aperture and the logical subarray division will be described.

### <First Example of Related Art>

The first example relates to a codebook/precoder design.

The codebook/precoder may be a codebook/precoder for the near filed (NF) or may be a codebook/precoder for the far field (FF).

In the present disclosure, the near field may mean a distance shorter than (or equal to) a specific threshold. In the present disclosure, the far field may mean a distance longer than (or equal to) a specific threshold.

The RIS (RIS-NCR) may receive information for the precoder/codebook from a NW. The information may be, for example, information regarding a position of another node (e.g., a UE/NW node). The information regarding the position may be, for example, at least one of information regarding the angle and information regarding the distance.

The first example is roughly divided into Examples 1-1 and 1-2. Example 1-1 or Example 1-2 may be applied, or Example 1-1 and Example 1-2 may be combined and applied.

### <Example 1-1>

Example 1-1 relates to a specific design of the codebook/precoder.

Example 1-1 is roughly divided into Examples 1-1-1 to 1-1-4. Any one of Examples 1-1-1 to 1-1-4 may be applied, or at least two of Examples 1-1-1 to 1-1-4 may be combined and applied.

The precoder may be calculated as an output of specific multiplication for a plurality of different precoders/matrices, for example.

In the present disclosure, the codebook, the precoder, the codeword, the matrix, the term, the vector, and the element may be replaced with each other.

### <Example 1-1-1>

The precoder in the RIS may be a precoder that decouples an angle-dependent term and a distance (position)-dependent term.

Example 1-1-1 may be used, for example, for beamforming/focusing of the NCR (RIS-NCR) including the RIS.

The precoder in the RIS may be calculated as, for example, a product of a distance-dependent precoder/matrix (e.g., WRing) and an angle-dependent precoder/matrix (e.g., WDFT) (e.g., a Hadamard product (element-wise product)).

For example, the precoder may be calculated by the following Equation 1.
[1]$\begin{matrix}W = {W}_{Ring} ∘ {W}_{DFT} \\ = \left[\begin{matrix}exp \left(j\frac{2 π \sqrt{{x}_{0}^{2} + {D}_{F}^{2}}}{λ}\right) exp \left(j\frac{2 πk}{ON}+j\frac{2 π \sqrt{{x}_{1}^{2} + {D}_{F}^{2}}}{λ}\right) ⋯ \\ exp \left(j\frac{2 π \left(N-1\right) k}{ON}+j\frac{2 π \sqrt{{x}_{N - 1}^{2} + {D}_{F}^{2}}}{λ}\right)\end{matrix}\right]\end{matrix}$ (Equation 1)

Here, D_{F} may be an axial distance between the array and the focal position.

Note that, in the present disclosure, the phase shift related to the distance-dependent precoder may be referred to as a ring-type phase distribution. Further, in the present disclosure, the codebook related to the distance-dependent precoder may be referred to as a ring-type codebook (RTC).

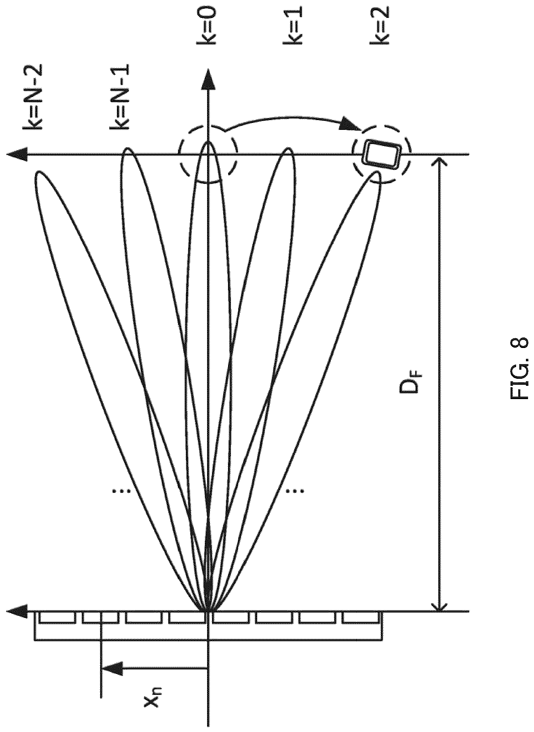

FIG. 8 is a diagram illustrating an example of the precoder according to Example 1-1-1. FIG. 8 illustrates an example of a uniform and linear array. In the example illustrated in FIG. 8, the beamfocusing at boresight is performed first. The distance-dependent precoder described above may be used for the beamfocusing. k is an index corresponding to a phase in the DFT.

In the example illustrated in FIG. 8, shifting of the focal position by the DFT vector is performed next. The angle-dependent precoder described above may be used for the shifting.

According to Example 1-1-1, using the angle-dependent term and the distance (position)-dependent term enables appropriate signal transmission to the target in the far field and the near field and allows for simple implementation.

### <Example 1-1-2>

The precoder in the RIS may be a precoder for which a piecewise linear approximation with DFT vectors is used.

For example, the precoder may be a precoder including a term for each of the subarrays (one or more arrays) and a distance (position)-dependent term.

Example 1-1-2 may be used for at least one of beamforming/focusing of the NCR (RIS-NCR) including the RIS and coherent transmission of a plurality of panels (e.g., panels disposed at wide intervals).

Further, Example 1-1-2 is suitable for the RIS-NCR based on the subarray.

The precoder in the RIS may be calculated as, for example, a product of a precoder for each of the subarrays (one or more arrays) and an angle-dependent precoder (e.g., a Hadamard product (element-wise product)).

The precoder for each of the subarrays (one or more arrays) may be represented by, for example, a product of a phase offset for each of the subarrays and an angle offset of the subarrays.

For example, the precoder may be calculated by the following Equation 2.
[2]${W}^{\left(i, j\right)} = {φ}_{PO}^{\left(i, j\right)} {W}_{AO}^{\left(i, j\right)} ∘ {W}_{DFT}$ (Equation 2)

Here, φ^{(i,j)}_{PO} may indicate a phase offset of the subarray (i,j). The phase offset of the subarray (i,j) may be quantized in a specific bit (e.g., b-bit) that can take a specific value (e.g., a value from 0 to 2π). Further, W^{(i,j)}_{AO} may indicate an angle offset of the subarray (i,j).

The W^{(i,j)}_{AO} may be calculated based on the inner product of the vector from the reference point of the array to the reference point of the subarray (i,j) and the vector from the reference point of the subarray (i,j) to the antenna element (m,n) in the subarray (i,j).

For example, W^{(i,j)}_{AO} may be calculated by the following Equation 3.
[3]${\left[{W}_{AO}^{\left(i, j\right)}\right]}_{\left(m.n\right)} = exp \left(j\frac{2 π}{λD}{\vec{r}}_{SA}^{\left(i, j\right)}⋅{\vec{r}}_{AE}^{\left(m, n\right)}\right)$ (Equation 3)

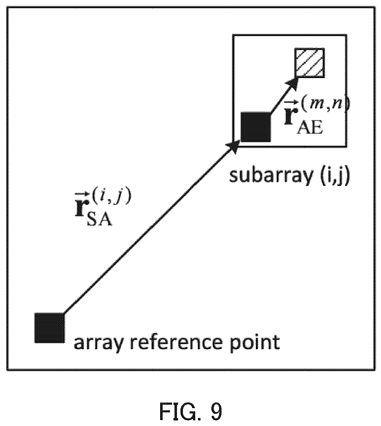

Here, D may be a distance from the array (e.g., a reference point of the array) to the target (e.g., the UE). Further, r^{(i,j)}_{SA} may indicate a vector from the reference point of the array to the reference point of the subarray (i,j), and r^{(m,n)}_{AE} may indicate a vector from the reference point of the subarray (i,j) to the antenna element (m,n) in the subarray (i,j) (see FIG. 9).

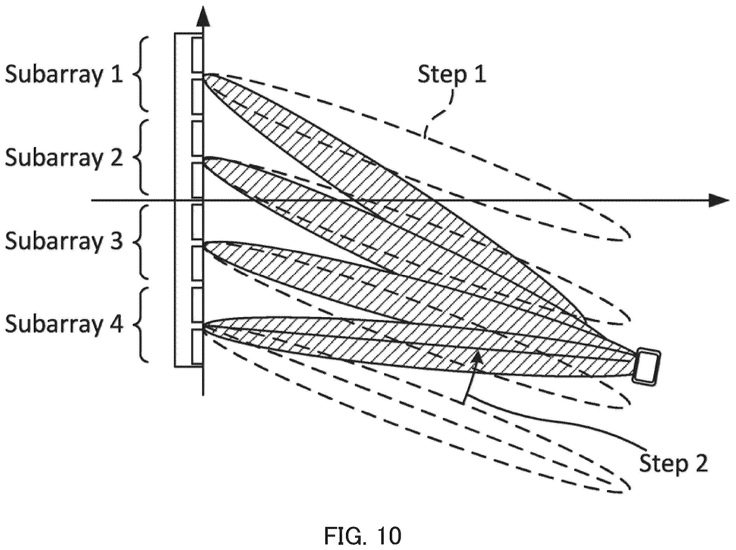

FIG. 10 is a diagram illustrating an example of the precoder according to Example 1-1-2. FIG. 10 illustrates an example of a uniform and linear array. In the example illustrated in FIG. 8, first, the focusing of the beam direction by the phase offset is performed for a plurality of arrays (each of subarrays) (Step 1). The above-described precoder based on the phase offset and the angle offset may be used for the beamfocusing.

In the example illustrated in FIG. 10, next, the shifting of the focal position by the DFT vector is performed (Step 2). The angle-dependent precoder described above may be used for the shifting.

According to Example 1-1-2, using the term for each of the subarrays (one or more arrays) and the distance (position)-dependent term enables appropriate signal transmission to the target in the far field and the near field.

### <Example 1-1-3>

The precoder in the RIS may be a precoder for which a term related to the near field and a term related to the far filed are used.

Example 1-1-3 may be used, for example, for acquiring the CSI in either the FF or the NF or both the FF and the NF (not limited to the FF and the NF), or may be used for the localization/sensing of the NF.

The precoder in the RIS may be calculated as, for example, a product of a first precoder and a second precoder (e.g., a Kronecker product (element-wise product)). The first/second precoder may include a term corresponding to the far field (or angle dependency) and a term corresponding to the near field (or distance dependency).

The precoder in the present example may be applied to a uniform planar array.

For example, the precoder W may be represented by the following Equation 4.
[4]$W = {W}_{{N}_{1} , {O}_{1} , {k}_{1} , D , {L}_{1}} ⊗ {W}_{{N}_{2} , {O}_{2} , {k}_{2} , D , {L}_{2}}$ (Equation 4)

Here, W is represented by a Kronecker product of first precoder W_{N_1, O_1, k_1, D, L_1} and second precoder W_{N_2, O_2, k_2, D, L_2}. Note that "N_1" represents "N₁". Other notations other than "N_1" may be represented in the same manner as "N_1".

W_{N_i, O_ i, k_i, D, L_i} may be represented by, for example, the following Equation 5.
[5]$\begin{matrix}{\left[{W}_{{N}_{i} , {O}_{i} , {k}_{i} , D , {L}_{i}}\right]}_{n} = exp \left(2πj\frac{{nk}_{i}}{{O}_{i} {N}_{i}}+πj\frac{\left({n}^{2}-{nN}_{RP}\right) \left({L}_{i}^{2}-k{′}_{i}^{2}\right)}{{O}_{i}^{2} {N}_{i}^{2} D}\right) \\ n = 0 , 1 , … , {O}_{i} {N}_{i} - 1 \\ {k}_{i} = 0 , 1 , … , {O}_{i} {N}_{i} - 1 \\ k {′}_{i} = \left\{\begin{matrix}{k}_{i} & if {k}_{i} \leq {O}_{i} {N}_{i} / 2 \\ {O}_{i} {N}_{i} - {k}_{i} & otherwise\end{matrix}\right. \\ i = 1 , 2\end{matrix}$ (Equation 5)

Here, number Nᵢ of antenna elements (scattering elements) in the i-th axial direction and oversampling number Oᵢ in the i-th axial direction in the RIS array may be the same as the NR DFT-based codebook specified in the existing NR. i = 1 may correspond to an x-axis direction (horizontal direction). i = 2 may correspond to a z-axis direction (vertical direction). Further, kᵢ is a codeword index, and k' may represent a second-order term.

Further, N_{RP} may be a value depending on the reference point of the RIS array. For example, N_{RP} may be calculated by N_{RP} = 2(d_{RP} - d₀)/Δd.

For example, d_{RP} - d₀ may indicate a distance between a specific antenna element (e.g., antenna element #0) and a reference point, and Δd may indicate an antenna element spacing.

For example, in a case where the bottom left element of the array is used as the reference point, N_{RP} may be 0.

For example, in a case where the center coordinate of the array is used as the reference point, N_{RP} may be calculated by Nᵢ - 1.

D may indicate a normalized distance between the reference point and the focal distance. For example, D may be calculated by (focal length)/λ.

L may be a value related to a normalized equivalent aperture. L may be calculated by, for example, ON·Δd/λ.

### <Example 1-1-4>

The precoder in the RIS may be a precoder for which a precoder related to an access link (between the UE and the RIS) and a precoder related to a backhaul link (between the BS and the RIS) are used.

For example, the precoder may be a precoder including a term for each of the subarrays (one or more arrays) and a distance (position)-dependent term.

Example 1-1-4 may be used for at least one of beamforming/focusing of the NCR (RIS-NCR) including the RIS in the backhaul link/access link and the cascaded LoS-MIMO (e.g., the LoS-MIMO requiring a joint focal points indication).

The precoder in the RIS may be calculated as, for example, a product of a precoder related to the access link and a precoder related to the backhaul link (e.g., a Hadamard product (element-wise product)).

For example, the precoder may be calculated by the following Equation 6.
[6]$W = {W}_{AC} ∘ {W}_{BH}$ (Equation 6)

Here, W_{AC} may indicate a precoder of a beam in an access link of the RIS-NCR (an access beam, a beam toward the UE). Further, W_{BH} may indicate a precoder of a beam in a backhaul link of the RIS-NCR (a backhaul beam, a beam toward the BS).

At least one of W_{AC} and W_{BH} may be a precoder calculated by, for example, at least one of the methods described in Examples 1-1-1 to 1-1-3.

The focal distances of W_{AC} and W_{BH} may be selected/determined independently, or may be selected/determined at the same time (jointly). For example, the focal distances of W_{AC} and W_{BH} may be selected/determined in a conjugate symmetric manner.

According to Example 1-1-4, the precoder/codebook can be appropriately designed in the backhaul link as well as in the access link.

### <Parameters Related to Codebook/Precoder>

In the following, the parameters in each of the equations in Example 1-1 will be described.

L may be a parameter related to the aperture (e.g., the antenna element). L may be reported as the capability of the RIS-NCR (NCR-MT).

L may be reported by the RIS as the antenna number (the number of antennas)/interval in n dimensions (e.g., n is 2).

L may be reported by the RIS as the length of a side of the RIS (e.g., the antenna number × the antenna interval).

Nᵢ, Oᵢ, kᵢ, kᵢₚ, and Dᵢ (i = 1 or 2) may be parameters related to the codebook for the access link/backhaul link.

Nᵢ and Oᵢ may be related to the codebook of the RIS. The codebook of the RIS may be configured in advance for the RIS or may be defined in advance in the specification.

Nᵢ and Oᵢ may be determined based on a report on the capability of the RIS or may be determined regardless of the dimension of the RIS.

kᵢ may be related to the codebook of the RIS. The codebook of the RIS may be indicated to the RIS.

kᵢₚ may be calculated in the RIS based on a specific configuration/indication for the RIS.

Dᵢ (e.g., i = 1) may be a parameter related to a distance between the BS and the RIS. Dᵢ (e.g., i = 2) may be a parameter related to a distance between the UE and the RIS.

For example, D₁ may be set in advance by the BS to the RIS, and D₂ may be indicated by the BS to the RIS.

For example, D₁ and D₂ may be indicated by the BS (using a single compound CW).

For example, D₁ may be set in advance by the BS to the RIS, and D₂ may be measured by the RIS.

For example, D₁ and D₂ may be measured by the RIS.

For example, logarithmic quantization may be used for determination of D₁ and D₂.

N_{RP} may be a parameter related to the reference point of the RIS. N_{RP} may be, for example, a parameter related to an offset of the reference point of the RIS.

N_{RP} may be related to the codebook of the RIS. The codebook of the RIS may be indicated to the RIS.

The reference point of the RIS may mean a specific position.

For example, the reference point of the RIS may be a position of an antenna/subarray at a specific position (e.g., the bottom left).

For example, the reference point of the RIS may be a position of the center point of the RIS. In this case, a single large RIS or a plurality of separated subarrays is suitable.

For example, the reference point of the RIS may be reported by the RIS. The reference point of the RIS may be determined in accordance with the reference point reported by the RIS.

A parameter indicating an adaptation (aperture adaptation) mode may be defined. The parameter may be used for aperture control of the RIS.

The parameter indicating the adaptation mode may be related to the codebook of the RIS. The codebook of the RIS may be indicated to the RIS.

A parameter indicating the shape/size of the RIS may be defined. The parameter may be used for aperture control of the RIS.

The parameter indicating the shape/size of the RIS may be related to the codebook of the RIS. The codebook of the RIS may be indicated to the RIS.

The parameter may be indicated by a bitmap. Further, the parameter may be indicated by the directions and the lengths of two sides of the aperture that form a parallelogram. Further, the parameter may be indicated by the arrangement of the subarray (e.g., the direction, the interval, the subarray number, and/or the size of the subarray). Further, the parameter may be indicated by at least one of the directions/lengths of two sides of the aperture that form a parallelogram (may be referred to as a general mode), the subarray number (sampling rate), and the subarray size.

A parameter indicating a roll-off factor may be defined.

A parameter related to the conjugate symmetric RTC may be defined. The parameter may be a parameter related to the reference point related to the position of the UE.

The reference point related to the position of the UE may mean, for example, a specific antenna port of the UE (e.g., antenna port #0).

The reference point related to the position of the UE may mean, for example, a specific (e.g., the center) UE array configured by the BS.

### <Example 1-2>

In Example 1-2, the quantization for the angle (angle information) and the distance (distance information) in an indication of a codebook (to the NW/RIS-NCR) will be described.

Example 1-2 is roughly divided into Examples 1-2-1 and 1-2-2. Any one of Examples 1-2-1 and 1-2-2 below may be applied, or Examples 1-2-1 and 1-2-2 below may be combined and applied.

The NW (or the RIS-NCR) may transmit, to the RIS-NCR (or the NW), the angle information/distance information on a codebook/precoder quantized using at least one of Examples 1-2-1 and 1-2-2.

### <Example 1-2-1>

The quantization related to the angle and the quantization related to the distance may be performed separately (independently).

A specific quantization method may be used for the angle. The specific quantization method may be, for example, a DFT-based quantization method. Using the DFT-based approach for the quantization of the angle enables the quantization suitable for a unified design for the FF and the NF.

For example, linear quantization may be used for the distance. Using the linear quantization makes the implementation in the apparatus easy. For example, logarithmic quantization may be used for the distance. Using the logarithmic quantization enables appropriate quantization regardless of whether the distance between apparatuses is a long distance or a short distance.

The quantization for the distance may be performed using the following Equation 7.
[7]${D}_{n} ← {b}^{n} ⋅ {d}_{0} , n = 0 , 1 , 2 , …$ (Equation 7)

In the present disclosure, the range of the NF may be related to the array area. For example, the range of the NF may be (almost) proportional to the array area.

### <Example 1-2-2>

The quantization related to the angle and the quantization related to the distance may be performed jointly.

For example, the quantization related to the angle and the distance may be performed using a uniform grid in Cartesian coordinates (the angle and the distance may be quantized on the uniform grid). In this case, it can be suitably used for beamfocusing based on the localization/position.

For example, the quantization related to the angle and the distance may be performed using a non-uniform grid in spherical coordinates (the angle and the distance may be quantized on the non-uniform grid). In this case, it is suitable from the viewpoint of the aperture/NF range at boresight, and using a wider beam in a short distance achieves more uniform coverage and a reduction in the number of beams.

For example, the quantization related to the angle and the distance may be performed using the following Equation 8.
[8]${D}_{n} ← {b}^{n} ⋅ {d}_{0} {cos}^{2} ω , n = 0 , 1 , 2 , …$ (Equation 8)

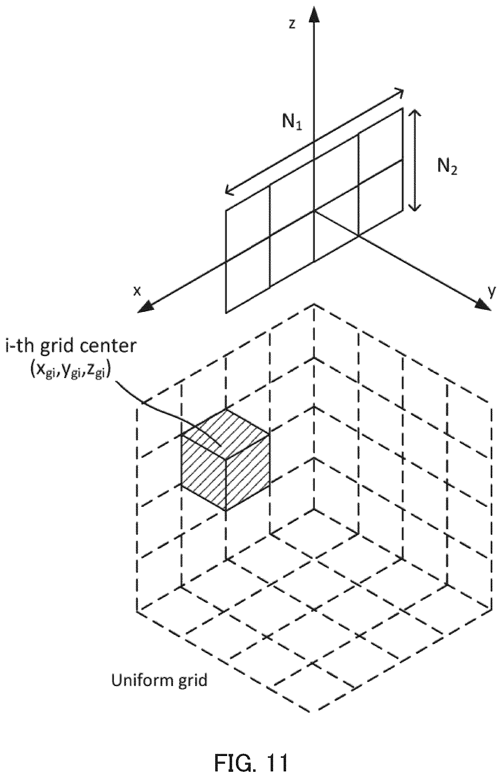

FIG. 11 is a diagram illustrating an example of a uniform grid in Cartesian coordinates. In the example illustrated in FIG. 11, a uniform grid in the Cartesian coordinates for the RIS (RIS-NCR) is illustrated.

In FIG. 11, (x_{gi}, y_{gi}, z_{gi}) may indicate the center coordinate of the i-th grid obtained from grid index i.

The uniform grid RTC using a uniform grid may be calculated by at least any one of the following Options 1 and 2.

The RTC using a uniform grid may be calculated by using the following Equation 9 (Option 1).
[9]$\begin{matrix}w = exp \left(-j2{πD}_{gi}\right) \\ {D}_{gi} \left({n}_{1}, {n}_{2}\right) = \sqrt{{\left({x}_{gi}-\left({n}_{1}-\frac{{N}_{1}}{2}\right)\frac{λ}{2}\right)}^{2} + {\left({y}_{gi}\right)}^{2} + {\left({z}_{gi}-\left({n}_{2}-\frac{{N}_{2}}{2}\right)\frac{λ}{2}\right)}^{2}}\end{matrix}$ (Equation 9)

The RTC using a uniform grid may be calculated by using the following Equation 10 (Option 2).
[10]$\begin{matrix}W = \left({W}_{{N}_{1} , θ}⊗{W}_{{N}_{2} , θ}\right) ∘ {W}_{D} \\ {\left[{W}_{{N}_{1} , θ}\right]}_{{n}_{1}} = exp \left(-{jπθn}_{1}\right) \\ {\left[{W}_{{N}_{2} , θ}\right]}_{{n}_{2}} = exp \left(-{jπθn}_{2}\right) \\ {\left[{W}_{D}\right]}_{\left({n}_{1}, {n}_{2}\right)} = {\left({x}_{gi}-\left({n}_{1}-\frac{{N}_{1}}{2}\right)\frac{λ}{2}\right)}^{2} + {\left({y}_{gi}\right)}^{2} + {\left({z}_{gi}-\left({n}_{2}-\frac{{N}_{2}}{2}\right)\frac{λ}{2}\right)}^{2} \\ {n}_{1} = 0 , 1 , … , {N}_{1} - 1 \\ {n}_{2} = 0 , 1 , … , {N}_{2} - 1\end{matrix}$ (Equation 10)

Here, the above θ may be calculated using the following Equation 11.
[11]$θ = sin μ cos ν , φ = sin ν$ (Equation 11)

Here, µ may represent an azimuth angle, and ν may represent an elevation angle. µ and the ν may be obtained by a specific coordinate conversion.

According to Example 1-2, the quantization for the angle (angle information) and the distance (distance information) in an indication of a codebook can be appropriately performed.

### <Second Example of Related Art>

The second example relates to the adaptation of the aperture in the RIS.

The second example is roughly divided into Examples 2-1 and 2-2. Any one of Examples 2-1 and 2-2 below may be applied, or Examples 2-1 and 2-2 below may be combined and applied.

The RIS-NCR may receive information (configuration information) on the control of the aperture (e.g., the antenna element) from the NW. The RIS-NCR may determine the aperture/antenna element to be used for a signal for a terminal based on the information.

### <Example 2-1>

The RIS (RIS-NCR) may select/decide/determine the aperture to be used from among the apertures included in the RIS.

Example 2-1 is roughly divided into Examples 2-1-1 and 2-1-2. Any one of Examples 2-1-1 and 2-1-2 below may be applied, or Examples 2-1-1 and 2-1-2 below may be combined and applied.

### <Example 2-1-1>

An unnecessary element (e.g., an antenna element) of the RIS may be configured to be off. Information related to the configuration may be included in information related to the control of the aperture received from the NW.

An unnecessary element of the RIS may be configured not to scatter (or reflect/refract) an incident signal. Further, an unnecessary element of the RIS may be configured to diffuse or randomly scatter (or reflect/refract) an incident signal.

### <Example 2-1-2>

Beamforming and the aperture adaptation may be used in combination.

Information on the beamforming may include, for example, information on a beamforming vector of the RIS.

For example, the (desired, actually used) aperture may be represented by a value (e.g., an aperture function) indicating the on/off state of each RIS element. Further, the (desired, actually used) aperture may be applied to a beamforming vector of the RIS.

For example, in a case where a value (e.g., an aperture function) corresponding to an RIS element is a first value (e.g., 0), the RIS element may be in an off state. Further, for example, in a case where a value (e.g., an aperture function) corresponding to an RIS element is a second value (e.g., 1), the RIS element may be in an on state.

The aperture adaptation may also be used to control a beam shape (e.g., at least one of a beam width, a side lobe, a main lobe, and a shape/size of a focus).

### <Example 2-2>

In Example 2-2, the control of the aperture in the RIS (RIS-NCR) will be described.

Example 2-2 is roughly divided into Examples 2-2-1 and 2-2-2. Any one of Examples 2-2-1 and 2-2-2 described below may be applied, or Examples 2-2-1 and 2-2-2 described below may be combined and applied.

### <Example 2-2-1>

A mode related to the aperture of the RIS-NCR may be defined.

The RIS-NCR may determine the aperture to be used based on the mode. The mode may include, for example, a first mode to a third mode.

The first mode may be a mode in which a part or all of the elements of the RIS are used in a square shape. The first mode may be referred to as, for example, a fallback mode.

The second mode may be, for example, a mode in which a part of the elements of the RIS is used in a parallelogram (rhombus) shape. The second mode may be referred to as, for example, a semi-continuous mode.

The third mode may be a mode in which only a specific RIS is used among the elements of the RIS. The specific RIS may be determined from a part of the elements of the RIS selected in a parallelogram (rhombus) shape. The third mode may be referred to as, for example, a discrete mode.

### <Example 2-2-2>

The shape/size of the aperture of the RIS-NCR to be used may be indicated by a specific method. Information related to the indication may be included in information related to the control of the aperture received from the NW.

For example, the shape/size of the aperture of the RIS-NCR to be used may be determined by a bitmap/parameter indicating the on/off state of the element of the RIS to be used.

The shape/size of the aperture in the second/third mode (e.g., the aperture in a parallelogram (rhombus) shape) may be indicated by a specific method. The specific method may be, for example, a method based on the lengths and the angle of two sides with respect to a specific point (e.g., a reference point) of the element of the RIS (the element of the RIS to be selected).

In the third mode, the size/number of the subarrays to be used may be additionally indicated.

According to the second example, the element/aperture of the RIS to be used can be appropriately determined/selected.

### <Items to be discussed in this embodiment>

In recent years, Beyond 5G/6G has been studied both in and outside Japan. In 6G, higher required performance is assumed. Further, in 6G, various use cases indicated below are assumed.
· Ultra-coverage extension and ultra-long distance communication
· Ultra-high capacity
· Ultra-reliable communication
· Virtual cell (user-centric no cell)
· Flexible NW
· Mesh NW/side link

In 6G, it is desirable to design with consideration for these use cases.

For 6G, the use of a high frequency band and the extension of the coverage are considered. As one of means for realizing the use of the high frequency band and the extension of the coverage, a base station design using network controlled repeater (NCR) and/or reconfigurable intelligence surface (RIS) as described above is considered.

Note that in the following, in the RIS, a configuration having the same function as the NCR-MT described above, for example, a function of performing at least one of receiving configuration/indication/control information from the base station or transmitting a request/report/response to the base station may be described as RIS-MT. Further, in the following, in the RIS, a configuration having the same function as the NCR-Fwd described above, for example, a function of performing relay/amplification from the backhaul link to the access link and relay/amplification from the access link to the backhaul link to relay communication between the base station and the UE may be described as RIS-Fwd or RIS. Note that, in the following description, "RIS" may be replaced with "RIS-MT" or "RIS-Fwd". Further, in a case where the RIS and the RIS-MT are distinguished from each other, the RIS and the RIS-MT may be provided separately and may be connected to each other by wire. However, in this case, the RIS-MT has position information (e.g., coordinates of the RIS, height of the RIS) of the RIS and information (e.g., tilt angle, rotation angle) on a posture of the RIS.

Further, in the RIS, for example, the RIS-MT may communicate with the UE. A link on which communication is performed between the RIS-MT and the UE may be a sidelink or an NR Uu interface.

As a means for extending the coverage, it is considered to appropriately position the RIS between the base station and the UE and to cover a range that cannot be covered by the base station.

In the RIS, of course, it is desirable to be provided in and around high-rise building groups (e.g., street canyons), factories, and/or buildings and/or houses, and to perform control of an operation for extending the coverage (e.g., control of a reflection angle) according to the provided location. For example, in the RIS, control is performed from the viewpoint of which beam is directed, in which direction, and from which location.

For example, the RIS forms a beam toward the UE and forwards a signal to the UE. In the forwarding operation of the RIS, it is desirable to specify in which direction the UE is present as viewed from the RIS.

For example, between the transmission/reception point (TRP) and the UE, a direction in which the UE is present is specified by performing processing of beam sweeping. The TRP may be replaced with the BS.

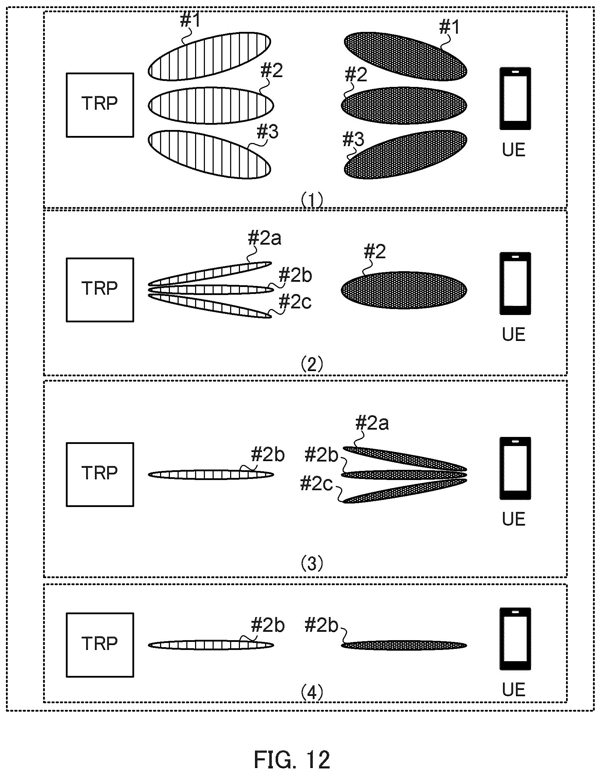

FIG. 12 is a diagram illustrating an example of a method of beam sweeping between the TRP and the UE. FIG. 12 illustrates a procedure from a procedure (1) to a procedure (3) that is a procedure of beam sweeping between the TRP and the UE, and a procedure (4) obtained as a result of the three procedures. Note that, in FIG. 12, the TRP forms a transmission beam and transmits a signal using the transmission beam, and the UE forms a reception beam and receives a signal using the reception beam. In FIG. 12, the transmission beam formed by the TRP and the reception beam formed by the UE are illustrated in different aspects.

In the procedure (1), initial beam selection is performed by beam sweeping of the SSB. For example, the TRP sweeps the plurality of SSBs in different beam directions. The UE receives the SSB, measures a reception quality (e.g., a received signal strength indicator (RSSI), a signal-to-noise power ratio (SNR)), and selects a beam based on the measurement result. In the initial beam selection, a coarse beam is selected.

For example, in the procedure (1) of FIG. 12, the TRP performs beam sweeping using transmission beams #1 to #3. The UE performs beam sweeping using reception beams #1 to #3. Note that transmission beams #1 to #3 and the reception beams #1 to #3 are beams having relatively wide beam widths and correspond to coarse beams.

In the procedure (1) of FIG. 12, transmission beam #2 and reception beam #2 are selected. The UE reports information indicating the selected beam (in the example of FIG. 12, transmission beam #2) to the TRP.

In the procedure (2), selection of a second-stage beam is performed by beam sweeping of a reference signal (RS) such as the CSI-RS. In the selection of the second-stage transmission beam, a finer transmission beam than the transmission beam used for the initial beam selection is selected. For example, in the second-stage transmission beam selection, a transmission beam having a relatively narrow beam width is used, which corresponds to the transmission beam having a wide beam width selected by the initial beam selection. For example, the TRP sweeps the RS in different beam directions. The UE receives the RS, measures a reception quality (e.g., a signal-to-noise power ratio (SNR)), and selects a beam based on the measurement result.

For example, in the procedure (2) of FIG. 12, the TRP performs beam sweeping using transmission beams #2a, #2b, and #2c corresponding to transmission beam #2. Transmission beams #2a, #2b, and #2c corresponding to transmission beam #2 are one or more transmission beams directed in a direction of transmission beam #2 and a vicinity thereof, and are beams having a beam width narrower than a beam width of transmission beam #2. The UE receives a signal (e.g., the RS) transmitted from the TRP using the selected reception beam #2.

In the procedure (2) of FIG. 12, transmission beam #2b is selected among transmission beams #2a, #2b, and #2c. The UE reports information indicating the selected beam (in the example of FIG. 12, transmission beam #2b) to the TRP.

In the procedure (3), selection of the second-stage reception beam is performed by beam sweeping of the RS (e.g., the CSI-RS). In the selection of the second-stage reception beam, a finer reception beam than the reception beam used for the initial beam selection is selected. For example, in the second-stage reception beam selection, a reception beam having a relatively narrow beam width is used, which corresponds to the reception beam having a wide beam width selected by the initial beam selection.

For example, in the procedure (3) of FIG. 12, the TRP transmits a signal (e.g., the RS) using transmission beam #2b. The UE performs beam sweeping using reception beams #2a, #2b, and #2c corresponding to reception beam #2. Reception beams #2a, #2b, and #2c corresponding to reception beam #2 are one or more reception beams directed in a direction of reception beam #2 and a vicinity thereof, and are beams having a beam width narrower than a beam width of reception beam #2.

In the procedure (3) of FIG. 12, reception beam #2b is selected among reception beams #2a, #2b, and #2c.

The transmission beam of the TRP and the reception beam of the UE are selected, and the beam sweeping is completed. In the example illustrated in the procedure (4) of FIG. 12, the TRP transmits a signal using transmission beam #2b, and the UE receives the signal transmitted from the TRP using reception beam #2b.

As described above, in the TRP and the UE, beams used by each of the TRP and the UE are selected by beam sweeping. A direction in which the selected beam of the TRP is directed corresponds to a direction in which the UE is present (hereinafter, may be referred to as a "UE direction"). In this case, the UE direction as viewed from the TRP is specified (or estimated) based on the beam selected by the beam sweeping.

In the RIS, since an operation of forwarding a signal in the UE direction as viewed from the RIS is performed, it is desirable to specify the UE direction as viewed from the RIS. The UE direction as viewed from the RIS corresponds to the UE direction with the RIS as a starting point.

However, there is room for improvement in a method of specifying the UE direction as viewed from the RIS.

For example, it is assumed that the RIS does not have a function of transmitting a signal from the RIS itself, and thus it is difficult to specify the UE direction as viewed from the RIS by a signal transmitted from the RIS using beam sweeping or the like. In a case where the UE direction as viewed from the RIS is difficult to specify, an operation of forwarding a signal in the UE direction as viewed from the RIS may not be performed.

Further, since the UE is assumed to move instead of being fixed, the UE direction as viewed from the RIS also changes according to the movement of the UE. Therefore, it is desirable to specify the UE direction as viewed from the RIS at regular intervals or as necessary.

Therefore, in the present embodiment, a method of appropriately performing control related to a relay operation in the RIS by specifying the UE direction as viewed from the RIS will be described. Note that, in the following, an example in which the RIS-MT having a capability (or function) of controlling the RIS and a capability (or function) of communicating with another radio communication apparatus (e.g., the UE) specifies the UE direction as viewed from the RIS and an example in which the BS specifies the UE direction as viewed from the RIS will be described.

Note that, in the following description, the terms "specify", "determine", "select", and "estimate" may be replaced with each other.

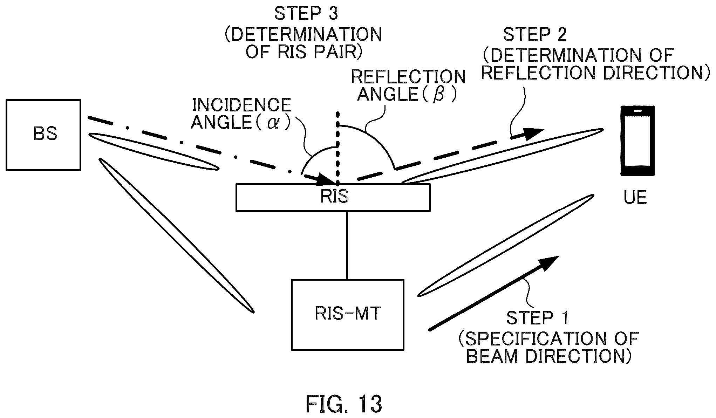

FIG. 13 is a diagram illustrating an example of control in the present embodiment. FIG. 13 illustrates a BS, RIS-MT, RIS, and UE. Further, FIG. 13 illustrates three steps related to the control.

As illustrated in FIG. 13, the control of the RIS in the present embodiment is executed in three steps. · Step 1: Specify a beam direction. · Step 2: Determine a reflection direction in the RIS based on the specified beam direction. · Step 3: Determine an RIS pair (e.g., a pair of an incidence angle and a reflection angle) based on the reflection direction in the RIS.

Here, the beam direction in Step 1 is a direction of a beam formed by the RIS-MT toward the UE and may correspond to the UE direction as viewed from the RIS-MT. Further, in Step 2, the reflection direction in the RIS is a reflection direction in a case where the RIS reflects a signal that has reached the RIS toward the UE and may correspond to the UE direction as viewed from the RIS. Further, in the following description, the reflection direction may be replaced with a reflection beam direction. For example, the control of the reflection direction may be regarded as control of the reflection beam direction or control of the reflection angle. The control of the reflection angle may be regarded as controlling a phase of the RIS to reflect at a configured reflection angle.

Further, in a case where Steps 1 to 3 are performed by the RIS-MT, the RIS-MT may feed back information indicating the determined RIS pair to the BS.

Hereinafter, an example of processing executed in each step will be described.

### <Step 1: specification of beam direction>

In order to specify the beam direction (e.g., the UE direction as viewed from the RIS-MT), the RIS-MT performs beam discovery (beam sweeping) to specify the UE direction as viewed from the RIS-MT.

Since the RIS-MT is treated as the UE, beam discovery may be performed as beam selection in terminal-to-terminal communication (e.g., communication via a sidelink). Alternatively, beam discovery is performed as beam selection in NR Uu.

A method of beam selection in the sidelink or NR Uu is not particularly specified, but for example, beam sweeping may be performed between the RIS-MT and the UE, as in the beam sweeping between the TRP and the UE described above.

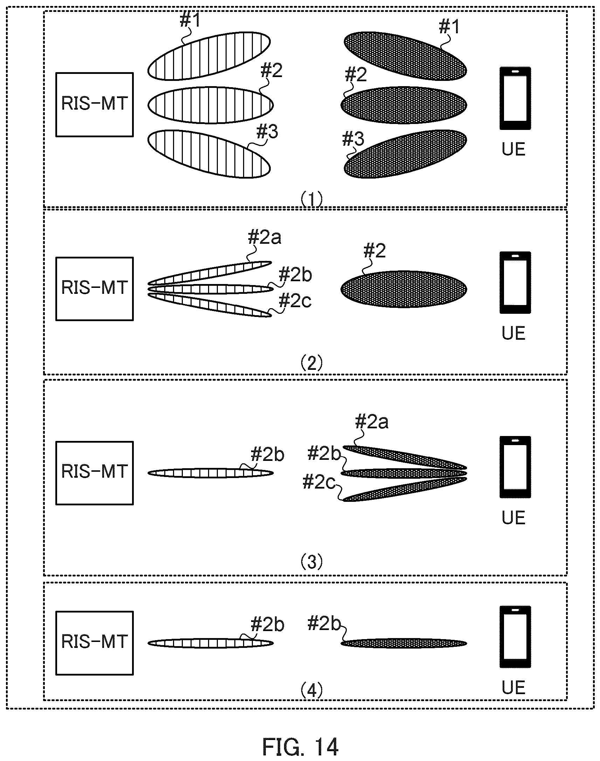

FIG. 14 is a diagram illustrating an example of a method of beam sweeping between the RIS-MT and the UE. FIG. 14 illustrates a procedure from a procedure (1) to a procedure (3) that is a procedure of beam sweeping between the RIS-MT and the UE, and a procedure (4) obtained as a result of the three procedures. Note that, in FIG. 14, the RIS-MT forms a transmission beam and transmits a signal using the transmission beam, and the UE forms a reception beam and receives a signal using the reception beam. In FIG. 14, the transmission beam formed by the RIS-MT and the reception beam formed by the UE are illustrated in different aspects.

In the procedure (1), initial beam selection is performed by beam sweeping of a sidelink SSB (e.g., a sidelink synchronization signal block (S-SSB)). For example, the RIS-MT sweeps the plurality of S-SSBs in different beam directions. The UE receives the S-SSB, measures a reception quality (e.g., a signal-to-noise power ratio (SNR) or the like), and selects a beam based on the measurement result. In the initial beam selection, a coarse beam is selected. The signal used in the procedure (1) is not limited to the S-SSB.

For example, in the procedure (1) of FIG. 14, the RIS-MT performs beam sweeping using transmission beams #1 to #3. The UE performs beam sweeping using reception beams #1 to #3. Note that transmission beams #1 to #3 and the reception beams #1 to #3 are beams having relatively wide beam widths and correspond to coarse beams.

In the procedure (1) of FIG. 14, transmission beam #2 and reception beam #2 are selected. The UE reports information indicating the selected beam (in the example of FIG. 14, transmission beam #2) to the RIS-MT.

In the procedure (2), selection of the second-stage transmission beam is performed by beam sweeping of a reference signal (e.g., at least one type of RS such as the CSI-RS). In the selection of the second-stage transmission beam, a finer transmission beam than the transmission beam used for the initial beam selection is selected. For example, in the second-stage transmission beam selection, a transmission beam having a relatively narrow beam width is used, which corresponds to the transmission beam having a wide beam width selected by the initial beam selection. For example, the RIS-MT sweeps the RS in different beam directions. The UE receives the RS, measures a reception quality (e.g., a signal-to-noise power ratio (SNR)), and selects a beam based on the measurement result.

For example, in the procedure (2) of FIG. 14, the RIS-MT performs beam sweeping using transmission beams #2a, #2b, and #2c corresponding to transmission beam #2. Transmission beams #2a, #2b, and #2c corresponding to transmission beam #2 are one or more transmission beams directed in a direction of transmission beam #2 and a vicinity thereof, and are beams having a beam width narrower than a beam width of transmission beam #2. The UE receives a signal (e.g., the RS) transmitted from the RIS-MT using the selected reception beam #2.

In the procedure (2) of FIG. 14, transmission beam #2b is selected among transmission beams #2a, #2b, and #2c. The UE reports information indicating the selected beam (in the example of FIG. 14, transmission beam #2b) to the TRP.

In the procedure (3), selection of the second-stage reception beam is performed by beam sweeping of the RS (e.g., the CSI-RS). In the selection of the second-stage reception beam, a finer reception beam than the reception beam used for the initial beam selection is selected. For example, in the second-stage reception beam selection, a reception beam having a relatively narrow beam width is used, which corresponds to the reception beam having a wide beam width selected by the initial beam selection.

For example, in the procedure (3) of FIG. 14, the RIS-MT transmits a signal (e.g., the RS) using transmission beam #2b. The UE performs beam sweeping using reception beams #2a, #2b, and #2c corresponding to reception beam #2. Reception beams #2a, #2b, and #2c corresponding to reception beam #2 are one or more reception beams directed in a direction of reception beam #2 and a vicinity thereof, and are beams having a beam width narrower than a beam width of reception beam #2.

In the procedure (3) of FIG. 14, reception beam #2b is selected among reception beams #2a, #2b, and #2c.

The transmission beam of the RIS-MT and the reception beam of the UE are selected, and the beam sweeping is completed. In the example illustrated in the procedure (4) of FIG. 14, the RIS-MT transmits a signal using transmission beam #2b, and the UE receives the signal transmitted from the RIS-MT using reception beam #2b.

In the stage of the procedure (3), the direction of the UE as viewed from the RIS-MT is determined one-to-one. Even in a case where a beam failure or the like occurs, the beam recovery and the beam selection operation may be performed in the same manner as the procedure illustrated in FIG. 14.

In the above-described procedure, the UE may report information indicating a reception quality of the received signal to the RIS-MT in addition to the information indicating the selected beam, or may report information indicating an arrival time of the received signal (e.g., an arrival time of the signal from the RIS-MT to the UE). The reception quality and the arrival time may be regarded as an example of information indicating a distance between the RIS-MT and the UE.

Note that, in FIG. 14, an example in which the RIS-MT transmits a signal (e.g., the S-SSB, the RS) is illustrated, but the present disclosure is not limited to this. For example, in the beam sweeping, the RIS-MT may receive the signal. The assumption that the RIS-MT transmits the signal may be referred to as a transmission assumption, and the assumption that the RIS-MT receives the signal may be referred to as a reception assumption. For example, in a case where a link between the RIS-MT and the UE is a sidelink, a correspondence relationship between the RIS-MT and the UE may be opposite to the example illustrated in FIG. 14.

For example, in a case where the correspondence relationship between the RIS-MT and the UE is opposite to the example illustrated in FIG. 14, in the procedure (1), the UE performs beam sweeping using the transmission beam, and the RIS-MT performs beam sweeping using the reception beam. Further, in this case, the correspondence relationship between the RIS-MT and the UE is also opposite to the example illustrated in FIG. 14 in the procedure (2) and subsequent procedures.

### <Step 2: determination of reflection direction>

After the beam direction (e.g., the UE direction as viewed from the RIS-MT) is determined, the reflection direction (e.g., the UE direction as viewed from the RIS) in the RIS is determined.

The RIS-MT holds information on a positional relationship between the RIS connected to the RIS-MT and the RIS-MT. The information on the positional relationship between the RIS and the RIS-MT includes information on at least one of a position (e.g., coordinates on a plane) of the RIS, a height of the RIS, a tilt angle of the RIS, or a rotation angle of the RIS. The tilt angle of the RIS and the rotation angle of the RIS may be regarded as an example of information on a posture of the RIS.

The RIS-MT determines the UE direction as viewed from the RIS based on the information on the positional relationship between the RIS and the RIS-MT and the UE direction as viewed from the RIS-MT. For example, coordinates of the UE assumed to be present in the UE direction as viewed from the RIS-MT are estimated, and a direction in which the estimated coordinates of the UE correspond to as viewed from the RIS is determined based on the positional relationship between the RIS and the RIS-MT. Note that information (e.g., the reception quality, the arrival time) indicating the distance between the RIS-MT and the UE may be used to estimate the coordinates of the UE.

### <Step 3: determination of reflection angle>

The RIS performs a relay operation (or a forwarding operation) by reflecting the signal to the UE that has reached (incident on) the RIS toward the UE direction as viewed from the RIS. The UE direction as viewed from the RIS corresponds to the reflection direction, and the reflection angle along the reflection direction is determined. Any one of the following three options is applied to the determination of the reflection angle of the RIS. Option 1: The RIS-MT controls the reflection angle of the RIS. Option 2: The BS controls the reflection angle of the RIS. Option 3: Combination of Option 1 and Option 2. The control of the RIS may include the determination of the reflection angle of the RIS and the indication (or instruction) of the determined reflection angle.

In the case of Option 1, the BS may not control the RIS. In the case of Option 2, the BS determines the reflection angle of the RIS, transmits information on the determined reflection angle to the RIS-MT, and the RIS-MT controls the reflection angle of the RIS based on the received information on the reflection angle.

As in the case of Option 1, since the RIS-MT controls the RIS, the RIS-MT may be regarded as an example of a control apparatus that controls the RIS. Further, in the case of Option 2, since the RIS is controlled by the BS determining the reflection angle of the RIS and transmitting information on the determined reflection angle to the RIS-MT, the BS may be regarded as an example of a control apparatus that controls the RIS.

In Option 1, in a case where the RIS-MT cannot control the reflection angle in which the UE direction as viewed from the RIS is the reflection direction in the RIS, the RIS-MT may report that the reflection angle cannot be controlled in the RIS to the BS. The case where the reflection angle in which the UE direction as viewed from the RIS is the reflection direction cannot be controlled in the RIS may be a case where the reflection angle in which the UE direction as viewed from the RIS is the reflection direction is not included in the reflection angle supported by the RIS. In this case, the BS may determine the RIS to be used or the reflection angle in the RIS based on the report. In the BS, the determination of the RIS to be used or the reflection angle in the RIS will be described below.

Next, each of the three options described above will be described.

### <Option 1 of beam control of RIS>

In Option 1, the RIS-MT determines the reflection angle in the RIS and controls the reflection angle (e.g., the direction of the reflection beam) in the RIS. In Option 1, the BS may not control the reflection angle.

For example, the RIS-MT specifies a pair of the incidence angle and the reflection angle in the RIS (hereinafter, may be referred to as an RIS pair).

The pair of the incidence angle and the reflection angle may be held in association with an index. A correspondence relationship between the pair of the incidence angle and the reflection angle and the index may be held in a table format. The table of the correspondence relationship between the pair of the incidence angle and the reflection angle and the index may be referred to as an incidence-reflection angle table. The incidence-reflection angle table may be held by the RIS-MT or the BS. The RIS-MT may have an incidence-reflection angle table of the RIS connected to the RIS-MT, and the BS may have an incidence-reflection angle table of each of one or more usable RISs.

### <Incidence-reflection angle table>

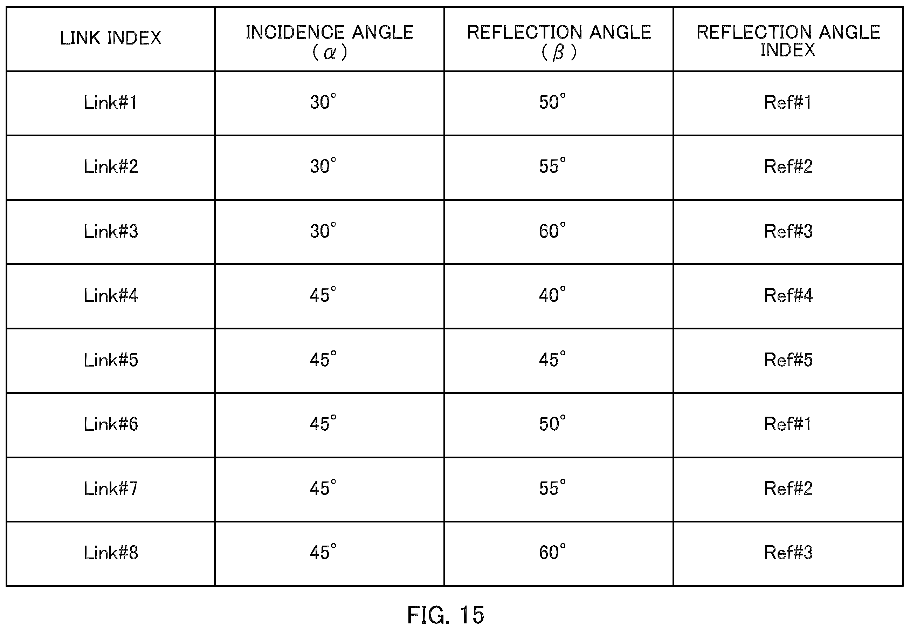

FIG. 15 is a diagram illustrating an example of an incidence-reflection angle table illustrating a correspondence relationship between the incidence angle and the reflection angle in the RIS. In this correspondence relationship, for example, the reflection angles of 50°, 55°, and 60° are associated with the incidence angle of 30°. This correspondence relationship indicates that the RIS can reflect the radio wave (signal) incident on the RIS at the incidence angle of 30° at any of the reflection angles of 50°, 55°, and 60°.

Further, in FIG. 15, a link index is assigned to a set of one incidence angle and one reflection angle corresponding to the incidence angle. The link index is an example of identification information for identifying a set of the incidence angle and the reflection angle. Further, in FIG. 15, a reflection angle index is assigned to the reflection angle. The reflection angle index is an example of identification information for identifying the reflection angle. Note that these two types of indices may be assigned, or at least one of the indices may be omitted.

In a case where the reflection angle is assigned an index, the reflection angle may be discretized in units of 5° with a relatively large granularity, and an index may be assigned to each reflection angle.

The incidence-reflection angle table illustrated in FIG. 15 is determined based on the capability (or characteristic) of the RIS. For example, the incidence-reflection angle table may be regarded as an example of the capability of the RIS.

The RIS pairs illustrated in FIG. 15 are used in a case of selecting the reflection angle (or the selectable angle) from the link index.

The RIS-MT has the incidence-reflection angle table illustrated in FIG. 15 in advance, and determines the RIS pair (e.g., the reflection angle) by referring to the incidence-reflection angle table. For example, the RIS-MT determines the UE direction as viewed from the RIS based on the UE direction as viewed from the RIS-MT and the positional relationship between the RIS and the RIS-MT, as in Step 1 and Step 2 described above. Then, in Step 3, the RIS-MT selects the RIS pair in which the UE direction as viewed from the RIS is the reflection direction from the incidence-reflection angle table. The reflection angle in which the UE direction as viewed from the RIS is the reflection direction may be a reflection angle for reflecting toward the UE direction as viewed from the RIS or a reflection angle for reflecting in a direction closest to the UE direction as viewed from the RIS.

For example, in a case where the UE direction as viewed from the RIS is determined to be a direction of 50°, the RIS-MT having the incidence-reflection angle table illustrated in FIG. 15 selects the reflection angle of 50°. Further, in a case where the UE direction as viewed from the RIS is determined to be a direction of 52°, the RIS-MT having the incidence-reflection angle table illustrated in FIG. 15 selects the reflection angle of 50° because the reflection angle of 50° is closest.

Here, in a case where the reflection angle in which the UE direction as viewed from the RIS is the reflection direction is not present in the incidence-reflection angle table, the RIS-MT may report that the reflection angle is not present to the BS. For example, in a case where the UE direction as viewed from the RIS is determined to be a direction of 30°, the RIS-MT having the incidence-reflection angle table illustrated in FIG. 15 reports that the corresponding reflection angle is not present in the table to the BS. The report may include information indicating the UE direction as viewed from the RIS and/or information indicating the UE direction as viewed from the RIS-MT. In this case, the BS may operate to relay the other RIS different from the RIS connected to the RIS-MT that has performed the report to communicate with the UE.

As described above, in a case where the reflection angle in which the UE direction as viewed from the RIS is the reflection direction is not present in the incidence-reflection angle table, the RIS-MT may report to the BS, and the BS may determine the RIS to be used or the reflection angle in the RIS. In the BS, the determination of the RIS to be used or the reflection angle in the RIS will be described below.

In a case of indicating the determined reflection angle or the RIS pair, for example, any of the following Alt. 1 to Alt. 3 may be applied.
Alt. 1: Indicate reflection angle index
Alt. 2: Indicate link index
Alt. 3: Indicate value of reflection angle

An indication method in a case of being indicated based on any of Alt. 1 to Alt. 3 described above is not particularly limited. For example, at least one of DCI, RRC, MAC CE, or OAM may be used.

The incidence angle may be used to determine the RIS pair. For example, the BS derives the incidence angle based on the positional relationship between the antenna of the BS and the RIS.

For example, the positional relationship between the antenna of the BS and the RIS is obtained by information on a three-dimensional position of the antenna of the BS and information on a three-dimensional position of the RIS. Then, the BS may derive the incidence angle from a geometric positional relationship between the antenna of the BS and the RIS in a three-dimensional space based on the information on the three-dimensional position of the antenna of the BS and the information on the three-dimensional position of the RIS. For example, a straight line connecting a representative point (e.g., a center) of the antenna of the BS in the three-dimensional space and a representative point (e.g., a center) of the reflective surface of the RIS may be defined, and an angle formed by the defined straight line and a perpendicular line extended from the representative point of the reflective surface of the RIS may be the incidence angle.

The information on the three-dimensional position of the antenna of the BS includes at least one of position information (e.g., latitude and longitude) of the BS on a twodimensional plane, a height of the antenna of the BS, a tilt angle of the antenna of the BS, or a rotation angle.

The information on the three-dimensional position of the RIS includes at least one of position information (e.g., latitude and longitude of the position) of the RIS on a twodimensional plane, a height of the RIS, or an angle (orientation) of the RIS.

Here, the BS may hold the information on the three-dimensional position of the antenna of the BS. Meanwhile, the BS may acquire the information on the three-dimensional position of the RIS from the RIS, may acquire the information from an external apparatus other than the RIS, or may hold the information in advance.

The BS reports the derived incidence angle to the RIS-MT, and the RIS-MT selects a pair of the reported incidence angle and the reflection angle corresponding to the determined reflection direction from the incidence-reflection angle table.

The RIS-MT may derive the incidence angle. For example, the RIS-MT derives the incidence angle based on the positional relationship between the antenna of the BS and the RIS (e.g., the reflective surface of the RIS). Further, the incidence angle may be determined based on a direction of a beam selected as a result of beam sweeping executed between the RIS-MT and the BS.

For example, the RIS-MT transmits information on the determined reflection angle (or the UE direction as viewed from the RIS or the UE direction as viewed from the RIS-MT) to the BS in a case where communication between the BS and the UE is possible and/or in a case where communication between the BS and the UE is impossible. The case where the communication between the BS and the UE is possible corresponds to, for example, a case where the RIS-MT can determine the reflection angle, and the case where the communication between the BS and the UE is impossible corresponds to, for example, a case where the RIS-MT cannot determine the reflection angle (e.g., a case where the reflection angle corresponding to the incidence-reflection angle table is not included).

In a case where the reflection angle corresponding to the reflection direction toward the specific one UE is obtained from the plurality of RISs, the coordinates of the one UE may be determined based on the obtained reflection angle. Then, the appropriate RIS may be selected from the plurality of RISs based on the determined UE coordinates. The determination of the UE coordinates will be described below.

By the processing as described above, the RIS-MT determines the reflection angle in the RIS and controls the reflection angle (e.g., the direction of the reflection beam) in the RIS.

As illustrated in Option 1, the RIS-MT can appropriately control the RIS by determining the reflection angle of the RIS and controlling the reflection angle in the RIS. For example, the RIS-MT performs beam sweeping to determine the UE direction as viewed from the RIS-MT and determines the UE direction as viewed from the RIS (e.g., the reflection direction). As a result, even in a case where the RIS cannot perform beam sweeping with the UE, the UE direction as viewed from the RIS can be determined, so that the RIS can be more appropriately controlled. Further, since the control can be performed between the RIS-MT, the RIS, and the UE, a time required for the control of the RIS can be shortened.

<Option 2 of beam control of RIS> In Option 2, the BS determines the reflection angle of the RIS and controls the reflection angle in the RIS. In Option 2, the RIS-MT indicates, to the BS, information for controlling the reflection angle.

For example, the BS may acquire information indicating the UE direction as viewed from the RIS or information indicating the UE direction as viewed from the RIS-MT from the RIS-MT and determine the reflection angle of the RIS based on the acquired information. The BS may acquire position information such as coordinates of the RIS-MT (or the RIS) from the RIS-MT or may have the position information such as the coordinates of the RIS-MT (or the RIS) in advance. A method of the BS determining the reflection angle of the RIS may be the same as the method of the RIS-MT determining the reflection angle of the RIS described above. For example, the BS may have the incidence-reflection angle table of the RIS and may select the reflection angle in which the UE direction as viewed from the RIS is the reflection direction from the incidence-reflection angle table.

Further, the BS may acquire information indicating the UE direction as viewed from the RIS or information indicating the UE direction as viewed from the RIS-MT from each of the plurality of RIS-MTs and determine the reflection angle of the RIS based on the acquired information.

The BS may select the RIS to be used for communication with the UE from the correspondence between the link index and the indicated reflection angle or may select a path composed of a plurality of RISs in a case of communicating with the UE via two or more RISs. This selection may be performed, for example, each time a report on the reflection angle is periodically performed.

For example, in Option 2, the BS specifies the position information (e.g., the coordinates) of the UE and performs the control in the RIS based on the specified position information of the UE. For example, the BS determines the RIS to be used in a case of transmitting the signal from the BS to the UE based on the position information of the UE, and controls the reflection angle (e.g., the direction of the reflection beam) in the determined RIS.

In a case where the BS acquires information on the UE direction as viewed from the RIS-MT from the plurality of RIS-MTs, the BS holds the information on the UE direction as viewed from each of the plurality of RIS-MTs. Since there are a plurality of the UE directions as viewed from the RIS-MT, the coordinates of the UE are estimated by using the coordinates of the RIS-MT (or the RIS) and at least a part (one or some) of the plurality of the UE directions as viewed from each of the RIS-MT (or the RIS). Hereinafter, two options for the UE coordinate estimation will be described. The BS estimates the UE coordinates based on any one of the two options.

### <Option 1 of UE coordinate estimation>

In a case where the UE receives the signal transmitted by the RIS-MT, the UE may measure an arrival time of the received signal. Here, the arrival time to be measured corresponds to the distance between the RIS-MT and the UE. Further, in a case where the UE receives the signal forwarded (or) by the RIS, the UE may measure an arrival time of the received signal. Here, the arrival time to be measured corresponds to the distance between the RIS and the UE.

The coordinates of the UE are estimated by the UE side in a case of the arrival time (time of arrival (ToA)). For example, the arrival time may be an arrival time of a signal (e.g., the S-SSB or the RS) transmitted from the RIS-MT and received by the UE or may be an arrival time of a signal (e.g., the S-SSB or the RS) transmitted from the BS and received by the UE. In a case of estimating the coordinates of the UE by the UE side, the UE may acquire position information such as the coordinates of the RIS-MT from each RIS-MT.

The coordinates of the UE may be estimated by the BS based on the arrival time. In this case, the UE reports the arrival time of the signal transmitted from each RIS-MT to each RIS-MT. The report of the arrival time to the RIS-MT may be performed together with, for example, a case where the UE reports the beam selected in Step 1 described above. The RIS-MT reports the arrival time reported from the UE to the BS. The report of the arrival time to the BS may be performed together with a case where the RIS-MT reports the UE direction as viewed from the RIS (or the UE direction as viewed from the RIS-MT) to the BS.

In a case where each of the plurality of RIS-MTs is distinguished, the plurality of RIS-MTs are described as RIS-MT #1, RIS-MT #2, and the like.

The coordinates of the UE are estimated based on the coordinates of the RIS-MT, the UE direction as viewed from the RIS-MT, and the arrival time of the signal transmitted from the RIS-MT and received by the UE. The coordinates of the UE may be estimated based on the coordinates of the RIS, the UE direction as viewed from the RIS, and the arrival time of the signal transmitted from the RIS and received by the UE.

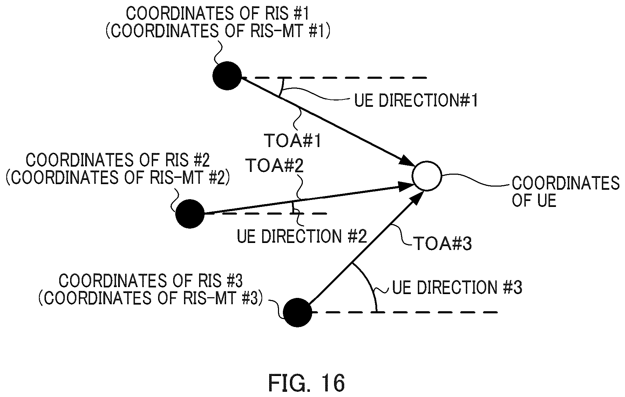

FIG. 16 is a diagram illustrating an example of Option 1 of the coordinate estimation of the UE. FIG. 16 illustrates coordinates of the RIS #i (i is any of 1, 2, and 3), a UE direction #i indicating the UE direction as viewed from the RIS #i, and a time of arrival (TOA) #i that is the arrival time corresponding to the distance between the RIS #i and the UE. The UE direction #i in FIG. 16 is defined as an angle with respect to a reference plane (or straight line). The UE direction may be replaced with another expression such as a beam direction or a beam emission angle.

The coordinates of the RIS #i may be replaced with the coordinates of the RIS-MT #i. Further, the UE direction #i may be the UE direction as viewed from the RIS-MT #i instead of the UE direction as viewed from the RIS #i. Further, the TOA #i may be an arrival time of a signal transmitted (or forwarded) by the RIS #i and received by the UE. Alternatively, the TOA #i may be an arrival time of a signal transmitted (or forwarded) by the RIS-MT #i and received by the UE.

As illustrated in FIG. 16, for example, the coordinates of the UE are estimated based on the coordinates of the RIS-MT #1, the UE direction as viewed from the RIS-MT #1, and the arrival time of the signal transmitted from the RIS-MT #1 and received by the UE.

Further, the coordinates of the UE are estimated based on the coordinates of each of the plurality of RIS-MTs, the UE direction as viewed from the plurality of RIS-MTs, respectively, and the arrival times of the signals transmitted respectively from the plurality of RIS-MTs and received by the UE. For example, in a case of two RIS-MTs, the coordinates of the UE are estimated based on the coordinates of the RIS-MT #1, the UE direction as viewed from the RIS-MT #1, the arrival time of the signal transmitted from the RIS-MT #1 and received by the UE, the coordinates of the RIS-MT #2, the UE direction as viewed from the RIS-MT #2, and the arrival time of the signal transmitted from the RIS-MT #2 and received by the UE.

In Option 1, the arrival time of the signal may be replaced with a reception quality (e.g., SNR or received signal strength indicator (RSSI)) of the signal.

<Option 2 of UE coordinate estimation> Since there are two or more UE directions as viewed from the RIS-MT, the coordinates of the UE are determined based on the two or more UE directions. For example, the coordinates of the intersection of the two or more UE directions are determined to be the coordinates of the UE.

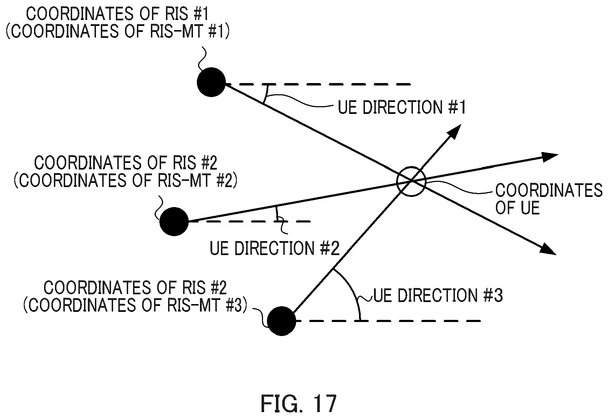

FIG. 17 is a diagram illustrating an example of Option 2 of the coordinate estimation of the UE. FIG. 17 illustrates coordinates of the RIS #i (i is any of 1, 2, and 3) and a UE direction #i indicating the UE direction as viewed from the RIS #i.

The coordinates of the RIS #i may be replaced with the coordinates of the RIS-MT #i. Further, the UE direction #i may be the UE direction as viewed from the RIS-MT #i instead of the UE direction as viewed from the RIS #i.

The UE direction #i in FIG. 17 is defined as an angle with respect to a reference plane (or straight line). The UE direction may be replaced with another expression such as a beam direction or a beam emission angle.

As illustrated in FIG. 17, the intersection of the UE direction #1, the UE direction #2, and the UE direction #3 is determined to be the coordinates of the UE.

In FIG. 17, an example in which the coordinates of the UE are determined from three UE directions is illustrated, but the coordinates of the UE may be determined from two UE directions.

Next, a flow of processing of the BS, the RIS, the RIS-MT, and the UE in Option 2 in which the BS determines the reflection angle of the RIS and controls the reflection angle in the RIS will be described. In the following description, an example in which the BS determines the UE coordinates based on Option 2 of the UE coordinate estimation will be described.

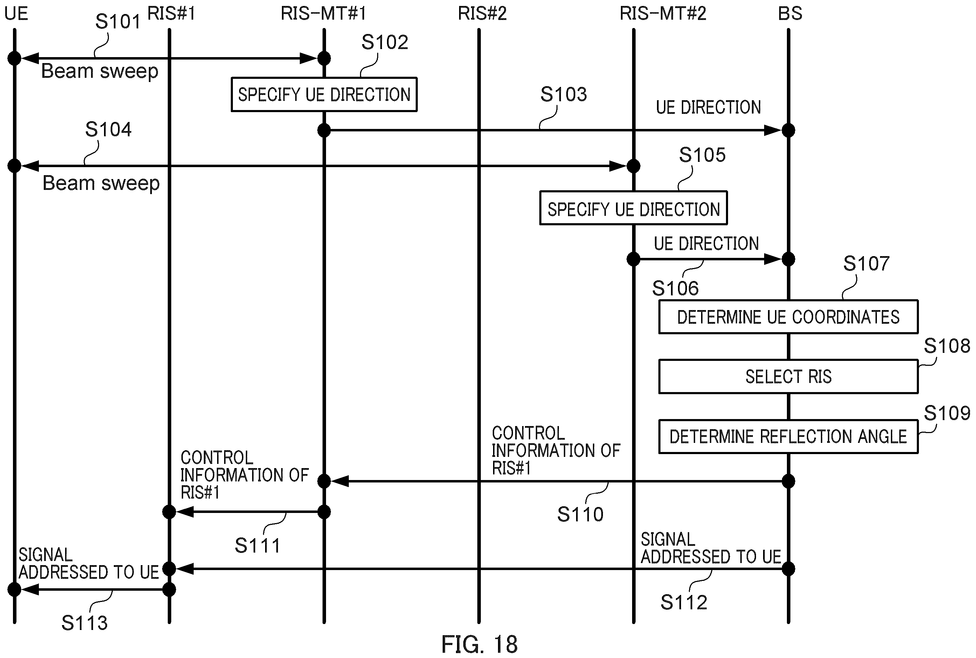

FIG. 18 is a sequence diagram illustrating a flow of processing of Option 2 of the beam control of the RIS in the present embodiment. FIG. 18 illustrates, by way of example, an example in which the BS determines the UE coordinates based on the information acquired from the RIS-MT #1 and the RIS-MT #2 and controls the RIS based on the determined UE coordinates.

The RIS-MT #1 performs beam sweeping between the RIS-MT #1 and the UE (S101). Then, the RIS-MT #1 specifies the UE direction based on a result of the beam sweeping (S102). The RIS-MT #1 transmits information indicating the specified UE direction to the BS (S103).

The RIS-MT #2 performs beam sweeping between the RIS-MT #2 and the UE (S104). Then, the RIS-MT #2 specifies the UE direction based on a result of the beam sweeping (S105). The RIS-MT #2 transmits information indicating the specified UE direction to the BS (S106).

The order of S101 to S103 and S104 to S106 is not limited to the order illustrated in FIG. 18. For example, the processing of S104 to S106 may be performed before S103.

The BS determines the UE coordinates based on the coordinates of each of the RIS-MT #1 and the RIS-MT #2 and the acquired UE direction (S107).

The BS selects the RIS to be used in a case of transmitting the signal to the UE from the RIS #1 and the RIS #2 based on the determined UE coordinates (S108). FIG. 17 illustrates an example in which the RIS #1 is selected. Then, the BS determines the reflection angle used in the selected RIS #1 (S109).

For example, the BS determines the UE direction (that is, the reflection direction) as viewed from the RIS for each of the selectable RISs (RIS #1 and RIS #2 in the example of FIG. 18) from the information on the position of each of the selectable RISs and the estimated UE coordinates. Then, the BS selects the RIS that can use the reflection angle corresponding to the determined reflection direction as the RIS to be used in a case of transmitting the signal to the UE, by referring to the incidence-reflection angle table of each of the selectable RISs and determines the reflection angle used in the selected RIS. In a case where a plurality of RISs can use the reflection angle corresponding to the determined reflection direction, information such as a distance between the BS and the RIS, a distance between the RIS and the UE, and a quality of a path from the BS to the UE may be used for the selection of the RIS.

The BS acquires the information on the position of each of the plurality of selectable RISs (e.g., the coordinates of the RIS) and the information on the incidence-reflection angle table of each of the plurality of selectable RISs from each RIS-MT.

The BS transmits the control information of the RIS #1 including the information indicating the determined reflection angle to the RIS-MT #1 that controls the selected RIS #1 (S110).

The RIS-MT #1 controls the forwarding operation (e.g., the reflection operation) of the RIS #1 by transmitting the control information of the RIS #1 based on the received control information to the RIS #1 (S111). For example, the forwarding operation (e.g., the reflection operation) is controlled by controlling the phase (e.g., the phase of each of a plurality of antenna elements) of the RIS #1.

The BS transmits the signal to the UE (S112). Here, the transmitted signal is forwarded (e.g., reflected) by the RIS #1 and is received by the UE (S113).

In the sequence diagram illustrated in FIG. 18, an example in which the BS selects the RIS and determines the reflection angle in the selected RIS has been described, but the present disclosure is not limited to this. For example, the BS may indicate the RIS-MT that controls the selected RIS of using the RIS for communication with the UE. In this case, the RIS-MT that receives the indication may determine the reflection angle used in the RIS. The indication from the BS in this case may include the coordinates of the UE. Then, the RIS-MT may determine the reflection angle in the RIS based on the coordinates of the UE included in the indication.

As illustrated in Option 2, the BS can appropriately control the RIS by determining the reflection angle of the RIS and controlling the reflection angle in the RIS. For example, as described above, the BS specifies the UE coordinates based on the information from the plurality of RIS-MTs and determines the reflection angle of the RIS, so that the reflection angle with respect to the accurate position of the UE can be determined, and the RIS can be more appropriately controlled. Further, in a case of Option 2, since the RIS suitable for the relay can be selected from the plurality of RISs, the RIS can be more appropriately controlled.

<Option 3 of beam control of RIS> In Option 3 of the beam control of the RIS, the control is performed by a combination of Option 1 and Option 2 of the beam control of the RIS.

For example, in a case where Option 1 is not available, Option 2 may be used. For example, as illustrated in Option 1, in a case where the RIS-MT cannot determine the reflection angle in the RIS and cannot control the reflection angle in the RIS, as illustrated in Option 2, the RIS-MT may determine the reflection angle in the RIS and control the reflection angle in the RIS.

Here, the case where Option 1 is not available may be, for example, a case where the incidence-reflection angle table included in the RIS-MT does not include the reflection angle corresponding to the reflection direction determined by the RIS-MT.

Further, for example, Option 1 and Option 2 may be selected in response to a request related to the communication between the BS and the UE. For example, in a case where the communication speed between the BS and the UE is relatively high or the realtime communication is required, Option 1 in which the RIS-MT controls the RIS without passing through the BS may be selected. Meanwhile, in a case where the communication speed between the BS and the UE is relatively low but high quality is required, Option 2 in which the BS determines the UE coordinates and controls the RIS may be selected.

Further, for example, Option 1 and Option 2 may be selected according to the type of RIS or RIS-MT. For example, in a case of issuing an indication to the RIS-MT #1 that does not support the processing of the beam sweeping, the BS may acquire the UE direction from another RIS-MT (e.g., the RIS-MT #2) that supports the processing of the beam sweeping, and determine the reflection angle of the RIS controlled by the RIS-MT #1 based on the acquired UE direction.

In the embodiment described above, the forwarding destination in a case where the RIS performs the forwarding is not limited to the example in which the UE is the forwarding destination. For example, the RIS may perform the forwarding toward the BS or may perform the forwarding toward another RIS. In this case, the RIS-MT may determine a direction from the RIS (or the RIS-MT) toward the forwarding destination and determine the reflection angle in the RIS based on the determined direction.

Note that, in the present disclosure, "A/B" and "at least one of A and B" may be replaced with each other. Further, in the present disclosure, "A/B/C" may mean "at least one of A, B, and C".

In the present disclosure, notify, activate, deactivate, indicate, select, configure, update, determine, and the like may be replaced with each other. In the present disclosure, support, control, be able to control, operate, and be able to operate may be replaced with each other.

In the present disclosure, radio resource control (RRC), an RRC parameter, an RRC message, a higher layer parameter, a field, an information element (IE), a configuration, and the like may be replaced with each other. In the present disclosure, a medium access control (MAC) control element (CE), an update command, an activation/deactivation command, and the like may be replaced with each other.

In the present disclosure, higher layer signaling may be any of the following or a combination thereof: radio resource control (RRC) signaling, medium access control (MAC) signaling, broadcast information, another message (e.g., a message from a core network such as a positioning protocol (e.g., an NR positioning protocol A (NRPPa)/an LTE positioning protocol (LPP)) message), and the like.

In the present disclosure, MAC signaling may use, for example, a MAC control element (MAC CE) or a MAC protocol data unit (PDU). Broadcast information may be, for example, a master information block (MIB), a system information block (SIB), remaining minimum system information (RMSI), other system information (OSI), or the like.

In the present disclosure, physical layer signaling may be, for example, downlink control information (DCI), uplink control information (UCI), or the like.

In the present disclosure, an aperture, an antenna array, an array, a subarray (a plurality of antenna elements, a part of an array), a panel, an RIS, an RIS array, a scattering element array, and the like may be replaced with each other. In the present disclosure, an antenna, an antenna element, a scattering element, and the like may be replaced with each other.

In the present disclosure, an NCR, an RIS, an NCR including an RIS, a network node, an apparatus, an IAB, an IAB- mobile termination (MT), an IAB- distribution unit (DU), an IAB- central unit (CU), a terminal, a base station, a relay station, a relay apparatus, a repeater, a reflector, a transponder, an RIS-NCR, an RIS-type NCR, an extended NCR, and the like may be replaced with each other.

### <Block Configuration Diagram>

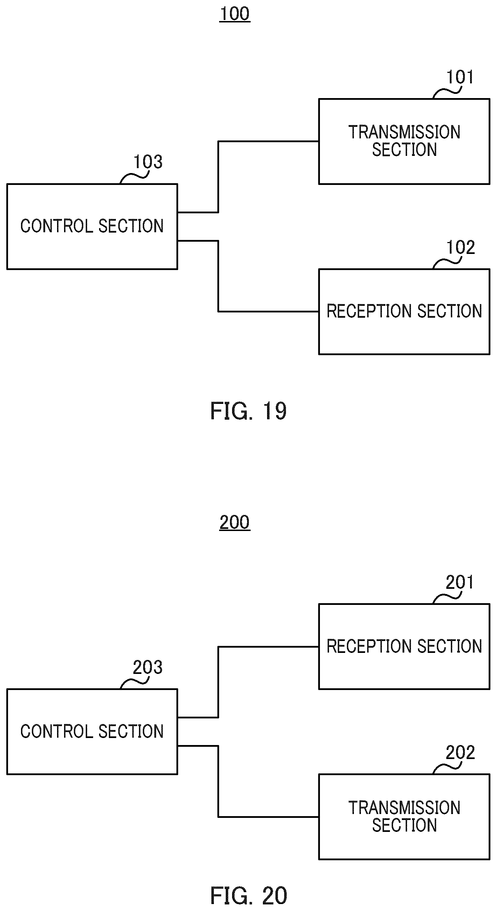

FIG. 19 is a block diagram illustrating a configuration example of base station 100 according to an embodiment of the present disclosure. Base station 100 includes, for example, transmission section 101, reception section 102, and control section 103. Base station 100 communicates with terminal 200 (see FIG. 20) by radio. Note that transmission section 101 and reception section 102 may be collectively referred to as a communication section. The control section may be referred to as a processing section, a processor, or the like.

Transmission section 101 transmits a DL signal to terminal 200. For example, transmission section 101 transmits the DL signal under the control of control section 103. For example, the DL signal may include information indicating scheduling related to signal transmission of terminal 200 (e.g., an UL grant), control information of a higher layer, or the like.

For example, transmission section 101 transmits various control signals (control signals of a higher layer or the like), reference signals, data signals, and the like to terminal 200 and/or radio apparatus 300 as the DL signal. Transmission section 101 transmits various signals, channels, configuration information, control information, and the like described in the above embodiment to terminal 200 as the DL signal, for example.

For example, transmission section 101 transmits information on the control of terminal 200 generated by control section 103 to terminal 200. Further, for example, transmission section 101 transmits information on the control of radio apparatus 300 generated by control section 103 to radio apparatus 300. Further, transmission section 101 transmits a data signal generated by control section 103 to terminal 200.

Reception section 102 receives a UL signal transmitted from terminal 200. For example, reception section 102 receives the UL signal under the control of control section 103. Further, reception section 102 may receive a UL signal transmitted from radio apparatus 300.

For example, reception section 102 receives a signal including terminal capability information (e.g., UE capability) of terminal 200, various control signals, reference signals, data signals, and the like from terminal 200 as the UL signal. Reception section 102 may also receive a signal including capability information (e.g., capability) of radio apparatus 300.

Control section 103 controls the overall (communication) operation of base station 100, including the transmission processing in transmission section 101 and the reception processing in reception section 102.

For example, control section 103 acquires information such as data and control information from a higher layer, and outputs the information to transmission section 101. Further, control section 103 outputs the data, control information, and/or the like received from reception section 102 to a higher layer.

For example, control section 103 allocates resources to be used for DL signal transmission and reception and/or resources to be used for UL signal transmission and reception, based on the signal (e.g., the data, the control information and/or the like) received from terminal 200 and/or the data, the control information and/or the like acquired from a higher layer. Information on the allocated resources may be included in control information to be transmitted to terminal 200.

Control section 103 executes operations other than the transmission and reception described in the above embodiment (note that the operations may be executed by transmission section 101 and/or reception section 102).

Further, control section 103 may generate control information related to a forwarding operation of radio apparatus 300. Control section 103 may transmit an indication (e.g., control information) related to communication control of radio apparatus 300 via transmission section 101.

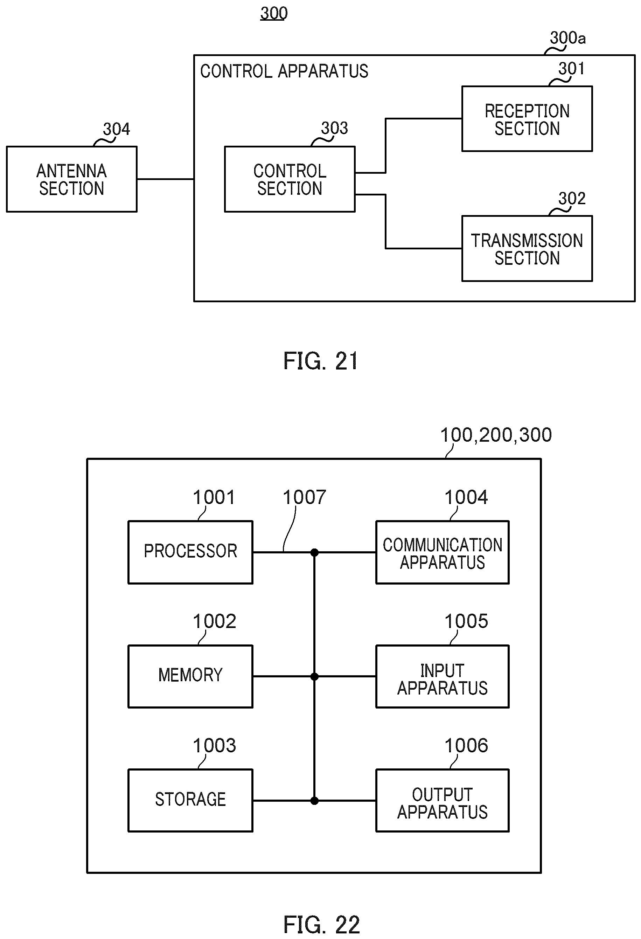

For example, control section 103 determines the control information for controlling the relay in antenna section 304 based on a first direction from antenna section 304 (refer to FIG. 21, exemplary antenna apparatus) that performs the relay of the signal transmitted to terminal 200 (exemplary radio communication apparatus) toward terminal 200. In this case, transmission section 101 transmits the control information to radio apparatus 300 (refer to FIG. 21) including antenna section 304. The first direction corresponds to, for example, the UE direction as viewed from the RIS described above. Further, the control information corresponds to, for example, the reflection angle in the RIS described above.

FIG. 20 is a block diagram illustrating a configuration example of terminal 200 according to an embodiment of the present disclosure. Terminal 200 includes, for example, reception section 201, transmission section 202, and control section 203. Terminal 200 communicates with base station 100 (see FIG. 19) by radio, for example. Note that reception section 201 and transmission section 202 may be collectively referred to as a communication section.

Reception section 201 receives a DL signal transmitted from base station 100. For example, reception section 201 receives the DL signal under the control of control section 203.

For example, reception section 201 receives various control signals, reference signals, data signals, and the like from base station 100 as the DL signal. Reception section 201 receives various signals, channels, configuration information, control information, and the like described in the above embodiment from base station 100 as the DL signal, for example.

For example, reception section 201 receives a signal from base station 100.

Transmission section 202 transmits a UL signal to base station 100. For example, transmission section 202 transmits the UL signal under the control of control section 203.

For example, transmission section 202 transmits a signal including information on the processing capability of terminal 200, various control signals, reference signals, data signals, and the like to base station 100 as the UL signal.

Control section 203 controls the overall (communication) operation of terminal 200, including the reception processing in reception section 201 and the transmission processing in transmission section 202.

For example, control section 203 acquires information such as data and control information from a higher layer, and outputs the information to transmission section 202. Further, control section 203 outputs, for example, the data, the control information and/or the like received from reception section 201 to a higher layer.

Control section 203 executes operations other than the transmission and reception described in the above embodiment (note that the operations may be executed by reception section 201 and/or transmission section 202).

Note that a signal received by terminal 200 from base station 100 may be a signal directly transmitted from base station 100 or may be a signal transmitted from base station 100 and forwarded by radio apparatus 300. Further, a signal transmitted by terminal 200 to base station 100 may be directly received by base station 100 or may be forwarded by radio apparatus 300 and received by base station 100. In this case, terminal 200 need not recognize whether the signal is forwarded by radio apparatus 300.

FIG. 21 is a block diagram illustrating a configuration example of radio apparatus 300 according to one embodiment of the present disclosure. Radio apparatus 300 corresponds to an example of the RIS and the RIS-MT. Radio apparatus 300 includes, for example, control apparatus 300a including reception section 301, transmission section 302, and control section 303, and antenna section 304. Control apparatus 300a corresponds to the RIS-MT, and antenna section 304 corresponds to an antenna panel, an antenna apparatus, or the RIS. Radio apparatus 300 communicates with, for example, base station 100 (refer to FIG. 19) and terminal 200 (refer to FIG. 20) by radio. Reception section 301 and transmission section 302 may be collectively referred to as a communication section.

Reception section 301 receives the signal transmitted from base station 100. Further, reception section 301 receives the signal transmitted from terminal 200. For example, reception section 301 receives the signal under the control of control section 303. The signal to be received may include a signal addressed to control apparatus 300a.

Transmission section 302 transmits the signal addressed to base station 100 to base station 100. Further, transmission section 302 transmits the signal for terminal 200 to terminal 200. For example, transmission section 302 transmits the signal under the control of control section 303. Further, transmission section 302 may transmit (or output) the control information for controlling antenna section 304 to antenna section 304.

Antenna section 304 performs the forwarding (or relay) processing of the signal under the control of control section 303. The forwarding processing may include at least one of processing of forwarding the signal addressed to terminal 200 that has reached from base station 100 to terminal 200 or processing of forwarding the signal addressed to base station 100 that has reached from terminal 200 to terminal 200.

Control section 303 controls all operations of radio apparatus 300 (communication), including the reception processing in reception section 301, the transmission processing in transmission section 302, and the forwarding processing in antenna section 304.

For example, control section 303 determines the control information for controlling the relay in antenna section 304 based on a first direction from antenna section 304 (exemplary antenna apparatus) that performs the relay of the signal transmitted to terminal 200 (exemplary radio communication apparatus) toward terminal 200. The first direction corresponds to, for example, the UE direction as viewed from the RIS described above. Further, the control information corresponds to, for example, the reflection angle in the RIS described above. In this case, transmission section 302 may transmit the control information to antenna section 304.

Control section 303 executes operations other than the transmission and reception described in the above embodiment (note that the operations may be executed by reception section 301 and/or transmission section 302).

Note that radio apparatus 300 in the present disclosure may be an example of a communication apparatus. Further, radio apparatus 300 in the present disclosure may be referred to by another name, such as a relay apparatus, a forwarding apparatus or a relay apparatus. Further, radio apparatus 300 in the present disclosure may be replaced with terminal 200 (e.g., UE). For example, radio apparatus 300 may be regarded as terminal 200 having a forwarding function (or a relay function).

The present disclosure has been described, thus far. Note that the division of the items in the above description is not essential to the present disclosure, and matters described in two or more items may be used in combination as necessary, and matters described in one item may be applied to matters described in another item (as long as they do not contradict each other).

### <Hardware Structure>

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, radio, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a terminal, a radio apparatus, and so on according to one embodiment of the present disclosure may function as a computer that executes the processes of the radio communication method of the present disclosure. FIG. 22 is a diagram to illustrate an example of a hardware structure of a base station, a terminal, and a radio apparatus according to an embodiment of the present disclosure. Physically, the above-described base station 100, terminal 200, and radio apparatus 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100, terminal 200, and radio apparatus 300 may be configured to include one or more of apparatuses illustrated in the drawings, or may be configured not to include part of apparatuses.

Each function of base station 100, terminal 200, and radio apparatus 300 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blue-ray (registered trademark) disk), a removable disk, a hard disk drive, a smart card, a flash memory device (e.g., a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and radio networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, reception section 301, transmission section 302 and the like, may be realized by communication apparatus 1004.

Input apparatus 1005 is an input device that receives input from the outside (e.g., a keyboard, a mouse, a microphone, a switch, a button, a sensor, and so on). Output apparatus 1006 is an output device that allows sending output to the outside (e.g., a display, a speaker, a Light Emitting Diode (LED) lamp, and so on). Note that input apparatus 1005 and output apparatus 1006 may be provided in an integrated structure (e.g., a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100, terminal 200, and radio apparatus 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (e.g., downlink control information (DCI), uplink control information (UCI)), higher layer signaling (e.g., Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (e.g., a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (e.g., Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or radio technologies (infrared, microwave, etc.), at least one of these wired line technologies or radio technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station and a base station subsystem that provides communication services within this coverage. In the present disclosure, the transmission of information from the base station to the terminal may be replaced with the base station indicating the terminal to perform control and operation based on the information.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (e.g., which may be referred to as "Device-to-Device (D2D)," "Vehicle-to-Everything (V2X)," and the like). In this case, terminal 200 and radio apparatus 300 may have the functions of base station 100 described above. The words such as "uplink" and "downlink" may be interpreted as the words corresponding to the terminal-to-terminal communication (e.g., "sidelink"). For example, an uplink channel, a downlink channel and so on may be interpreted as a sidelink channel.

Likewise, the terminal in the present disclosure may be interpreted as base station. In this case, base station 100 and relay station 300 may have the functions of terminal 20 described above.

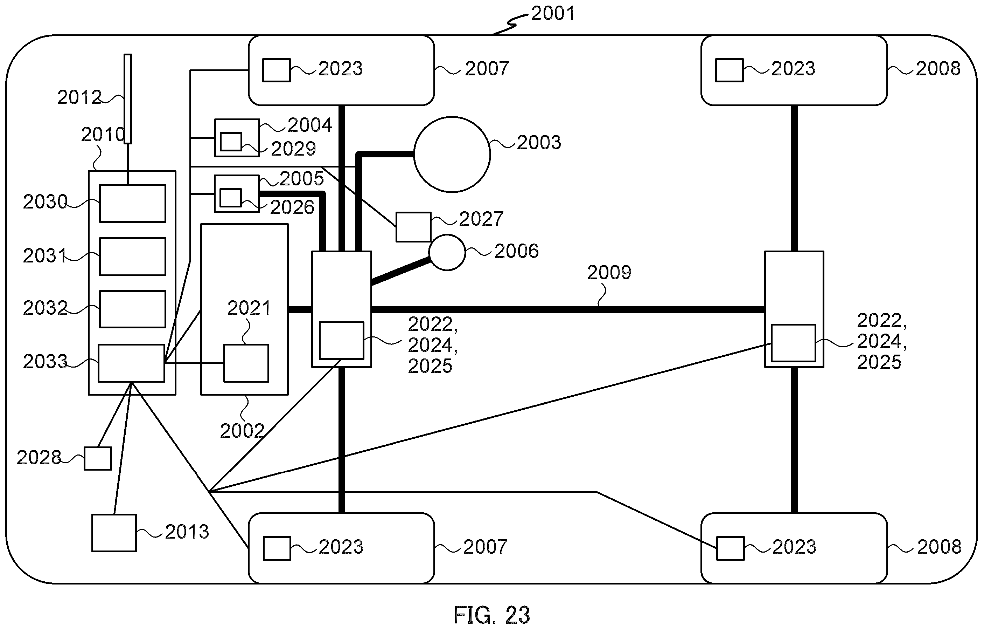

FIG. 23 illustrates a configuration example of vehicle 2001. As illustrated in FIG. 23, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (e.g., a keyboard, a mouse, a microphone, a switch, a button, a sensor, a touch panel, and the like) for receiving input from the outside, or may include an output device (e.g., a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 29 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (e.g., outputs information to devices, such as a display and a speaker, based on the PDSCH received by communication module 2013 (or data/information decoded from the PDSCH)).

Further, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (e.g., 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (e.g., 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (e.g., the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (e.g., a normal TTI, a subframe, or the like) may be interpreted as a TTI having a time length exceeding 1 ms, and a short TTI (e.g., a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
20 NG-RAN
100 Base station (gNB)
200 Terminal (UE)
300 Radio apparatus
300a Control apparatus
101, 202, 302 Transmission section
102, 201, 301 Reception section
103, 203, 303 Control section
101 Processor
1002 Memory
1003 Storage
1004 Communication apparatus
1005 Input apparatus
1006 Output apparatus
1007 Bus

## Claims

1. A control apparatus, comprising:
a control section that determines control information based on a first direction toward a radio communication apparatus from an antenna apparatus that performs relay of a signal transmitted to the radio communication apparatus, the control information being for controlling relay in the antenna apparatus; and
a transmission section that transmits the control information to the antenna apparatus.

2. The control apparatus according to claim 1, wherein, the control section specifies a second direction toward the radio communication apparatus from the control apparatus based on a result of beam sweep processing performed for the radio communication apparatus and determines the first direction based on the second direction and a positional relationship between the control apparatus and the antenna apparatus.

3. The control apparatus according to claim 1, wherein, the control section acquires information indicating the first direction from another control apparatus connected to the antenna apparatus.

4. The control apparatus according to claim 1, wherein, the control section estimates a position of the radio communication apparatus based on a plurality of the first directions respectively from a plurality of the antenna apparatuses toward the radio communication apparatus and determines the control information based on the estimated position.

5. A radio communication system, comprising:
a radio communication apparatus;
an antenna apparatus that performs relay of a signal transmitted to the radio communication apparatus; and
a control apparatus that controls the antenna apparatus, wherein,
the control apparatus includes
a control section that determines control information for controlling relay in the antenna apparatus, based on a first direction toward the radio communication apparatus from the antenna apparatus; and
a transmission section that transmits the control information to the antenna apparatus.

6. A control method, comprising:
determining, by a control apparatus, control information based on a first direction toward a radio communication apparatus from an antenna apparatus that performs relay of a signal transmitted to the radio communication apparatus, the control information being for controlling relay in the antenna apparatus; and
transmitting, by the control apparatus, the control information to the antenna apparatus.
